(19) **Europäisches Patentamt**
**European Patent Office**
**Office européen des brevets**

(11) **EP 3 458 815 B1**

(12) **EUROPÄISCHE PATENTSCHRIFT**

(45) Veröffentlichungstag und Bekanntmachung des Hinweises auf die Patenterteilung:
**22.06.2022 Patentblatt 2022/25**

(21) Anmeldenummer: **17720468.2**

(22) Anmeldetag: **27.04.2017**

(51) Internationale Patentklassifikation (IPC):
**G01F 1/84** *(2006.01)* **G01F 15/18** *(2006.01)*
**F16L 41/02** *(2006.01)* **G01N 9/00** *(2006.01)*
**G01N 11/16** *(2006.01)*

(52) Gemeinsame Patentklassifikation (CPC):
**G01F 1/8409; G01F 1/8413; G01F 1/8495;**
**G01F 15/185;** G01N 9/002; G01N 11/16;
G01N 2009/006

(86) Internationale Anmeldenummer:
**PCT/EP2017/060079**

(87) Internationale Veröffentlichungsnummer:
**WO 2017/198440 (23.11.2017 Gazette 2017/47)**

(54) **FLUIDLEITUNGSSYSTEM MIT STRÖMUNGSTEILER ZUR VIBRONISCHEN MESSUNG PHYSIKALISCHER GRÖSSEN EINES STRÖMENDEN FLUIDS**

FLUID PIPE SYSTEM WITH MANIFOLD FOR THE VIBRONIC MEASUREMENT OF PHYSICAL PARAMETERS OF FLOWING FLUIDS

SYSTÈME DE TUYAUTERIE AVEC BRANCHEMENT POUR MESURER DE VALEURS PHYSIQUES DE FLUIDES EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2016 DE 102016109058**

(43) Veröffentlichungstag der Anmeldung:
**27.03.2019 Patentblatt 2019/13**

(73) Patentinhaber: **Endress+Hauser Flowtec AG**
**4153 Reinach (CH)**

(72) Erfinder:
• **SCHLACHTER, Natalie**
**79664 Wehr (DE)**

• **WERNER, Marc**
**79639 Grenzach-Wyhlen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
| | |
|---|---|
| EP-A2- 0 272 758 | DE-A1- 3 632 800 |
| US-A- 5 661 232 | US-A1- 2008 115 577 |
| US-A1- 2015 082 916 | US-A1- 2015 153 210 |

**Beschreibung**

Die Erfindung betrifft ein Fluidleitungssystem, insb. nämlich ein dem Messen wenigstens einer physikalischen Meßgröße eines ein einer Rohrleitung strömenden Fluid dienliches Fluidleitungssystem.

In der EP-A 816 807, der US-A 2001/0037690, der US-A 2008/0184816, der US-A 2011/0161017, der US-A 2011/0154912, der US-A 2011/0161018, der US-A 2011/0146416, der US-A 2012/0167697, der US-A 2015/0082916, der US-A 48 01 897, der US-A 48 23 613, der US-A 56 02 345, der US-A 57 96 011, der WO-A 90/15310, der WO-A 00/08423, der WO-A 2006/107297, der WO-A 2006/118557, der WO-A 2008/059262, der WO-A 2009/048457, der WO-A 2009/078880, der WO-A 2009/120223, der WO-A 2009/123632, der WO-A 2010/059157, der WO-A 2012/170020, der WO-A 2013/006171, der WO-A 2013/070191, der WO-A 2015/085025 oder auch der eigenen, nicht vorveröffentlichten deutschen Patentanmeldung 102015118864.3 ist jeweils wenigstens ein dem Führen eines strömenden Fluids, beispielsweise nämlich einer Flüssigkeit, einem Gas oder einer Dispersion, dienliches Fluidleitungssystem gezeigt, das eine als - gelegentlich auch als Verteiler-, Sammel- oder Hosenstück oder auch als Strömungsteiler bezeichnete - Leitungsverzweigung ausgebildete erste Fluidleitung mit einem von einer Wandung umhüllten, sich von einer in einem ersten Leitungsende der ersten Fluidleitung verorteten ersten Strömungsöffnung sowohl bis zu einer in einem zweiten Leitungsende nämlicher ersten Fluidleitung verorteten zweiten Strömungsöffnung als auch bis zu einer von nämlicher zweiten Strömungsöffnung beabstandet im zweiten Leitungsende nämlicher ersten Fluidleitung verorteten dritten Strömungsöffnung erstreckenden (Y-förmigen) Lumen, eine als starres Rohr ausgebildete zweite Fluidleitung mit einem von einer Wandung umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen, eine als starres Rohr ausgebildete dritte Fluidleitung mit einem von einer Wandung umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen sowie eine als Leitungsvereinigung ausgebildete, ansonsten zur ersten

Fluidleitung im wesentlichen baugleichen vierten Fluidleitung autweist. Bei der in US-A 2015/0082916 gezeigten Leitungsverzweigung weist die Strömungsöffnung der ersten Fluidleitung an deren ersten Leitungsende wie auch die Verzweigungsstelle an deren zweiten Leitungsende einen kreisförmigen Querschnitt auf, während die Strömungsöffnungen der zweiten und dritten Fluidleitungen an nämlicher Verzweigungsstelle im Wesentlichen D-förmig ausgebildet sind.

Die Wandungen der Fluidleitungen können beispielsweise aus einem Metall, wie z.B. einem Edelstahl, bestehen.

Das Fluidleitungssystem ist im besonderen dafür vorgesehen, ein in die über die erste Strömungsöffnung der ersten Fluidleitung einströmen gelassenes Fluid via zweite und dritte Fluidleitung weiter zur vierten Fluidleitung zu führen und über deren erste Strömungsöffnung wieder ausströmen zu lassen. Dafür ist die erste Fluidleitung jeweils mit deren zweitem Leitungsende sowohl mit dem ersten Leitungsende der zweiten Fluidleitung als auch mit dem ersten Leitungsende der dritten Fluidleitung verbunden, derart das sowohl das Lumen der zweiten Fluidleitung als auch das Lumen der dritten Fluidleitung mit dem Lumen der ersten Fluidleitung kommuniziert bzw. daß die erste Strömungsöffnung der zweiten Fluidleitung in die zweite Strömungsöffnung der ersten Fluidleitung und die erste Strömungsöffnung der dritten Fluidleitung in die dritte Strömungsöffnung der ersten Fluidleitung münden. Analog dazu ist die vierte Fluidleitung jeweils mit deren zweitem Leitungsende sowohl mit dem zweiten Leitungsende der zweiten Fluidleitung als auch mit dem zweiten Leitungsende der dritten Fluidleitung verbunden, derart das sowohl das Lumen der zweiten Fluidleitung als auch das Lumen der dritten Fluidleitung auch mit dem Lumen der vierten Fluidleitung kommuniziert bzw. daß die zweite Strömungsöffnung der zweiten Fluidleitung in die zweite Strömungsöffnung der vierten Fluidleitung und die zweite Strömungsöffnung der dritten Fluidleitung in die dritte Strömungsöffnung der vierten Fluidleitung münden, so daß im Ergebnis mittels des jeweiligen Fluidleitungssystems zwei strömungstechnisch parallel geschaltete, nämlich durch die zweite Fluidleitung bzw. die dritte Fluidleitung führende Strömungspfade bereitgestellt sind.

Die Fluidleitungen der vorbezeichneten Fluidleitungssystemen sind zudem jeweils als integraler Bestandteil eines vibronischen Meßwandlers ausgebildet, der dazu dient bzw. eingerichtet ist, wenigstens ein mit wenigstens einer Meßgröße - beispielsweise einer Massendurchflußrate, einer Dichte oder einer Viskosität - des hindurchströmenden Fluids korrespondierenden, nämlich wenigsten einen von nämlicher Meßgröße abhängigen Signalparameter - beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel - aufweisenden Meßsignals zu generieren. Nämlicher Meßwandler wiederum ist unter Bildung eines Durchfluß-Meßgerät, beispielsweise nämlich eines Coriolis-Massendurchfluß-Meßgeräts, eines Dichte-Meßgeräts und/oder eines Viskosität-Meßgeräts, mit einer entsprechenden Meßgerät-Elektronik verbunden. Zudem sind die zweite Fluidleitung und die dritte Fluidleitung ferner dafür eingerichtet, von dem auszumessenden Fluid durchströmt und währenddessen zwecks Generierung des wenigstens einen Meßsignals vibrieren gelassen zu werden, wobei als Meßsignal ein Schwingungsbewegungen der zweiten und/oder dritten Fluidleitungen repräsentierendes Schwingungsmeßsignal mit wenigstens einer von einer Dichte des in den Fluidleitungen geführten Fluids abhängigen Signalfrequenz und/oder einer von einer Massendurchflußrate abhängigen Phasenwinkel dient.

Zum Anregen bzw. Aufrechterhalten mechanischer Schwingungen, beispielsweise nämlich von Biegeschwingungen sowohl der zweiten Fluidleitung als auch der dritten Fluidleitung umfaßt jedes der vorbezeichneten Fluidleitungssysteme ferner jeweils wenigstens einen elektromechanischen, beispielsweise nämliche elektrodynamischen, Schwingungserreger. Darüberhinaus weist das Fluidleitungssystem wenigstens einen, beispielsweise zumindest an der zweiten Fluidleitung angebrachten und/oder zumindest in deren Nähe plazierten, Schwingungssensor zum Erzeugen des wenigstens einen mit der Meßgröße korrespondierenden Meßsignals. Nicht zuletzt für den vorbezeichneten Fall, daß das Fluidleitungssystem bzw. der damit gebildete Meßwandler dafür vorgesehen ist, eine Massendurchflußrate bzw. einen Massendurchfluß des hindurchströmenden Fluids zu messen, umfaßt nämliches Fluidleitungssystem desweiteren wenigstens einen, beispielsweise nämlich vom jeweiligen ersten Sensor entfernt an der zweiten Fluidleitung angebrachten und/oder zumindest in deren Nähe plazierten, ggf. zum ersten Schwingungssensor auch baugleichen, weiteren (zweiten) Schwingungssensor zum Erzeugen wenigstens eines weiteren ebenfalls mit der Meßgröße korrespondierenden Meßsignals, insb. derart, daß zwischen den beiden Meßsignalen eine von der Massendurchflußrate abhängige Phasendifferenz etabliert ist. Zwecks Ermittlung der Meßgröße werden die beiden vibrierenden Fluidleitungen typischerweise zu gegengleichen Resonanzschwingungen in einem Antriebs- oder auch Nutzmode, nämlich zu Schwingungen auf wenigstens einer als Nutzfrequenz für die Messung dienlichen momentanen Resonanzfrequenz eines der ihnen gemeinsam innwohnenden natürlichen Schwingungsmoden aktiv angeregt, beispielsweise - wie u.a. auch in der eingangs erwähnten US-A 48 01 897 gezeigt - mittels einer in der Meßgerät-Elektronik vorgesehenen, sowohl an den wenigstens einen Sensor als auch den wenigstens einen Schwingungssensor elektrisch gekoppelten, ggf. als Phasenveriegelten-Regelschleife *(PLL - phase locked loop)* ausgebildeten elektronischen Treiberschaltung.

Die vorbezeichneten, als Meßwandler dienlichen Fluidleitungssysteme sind zudem im besonderen dafür vorgesehen bzw. dafür eingerichtet, in den Verlauf einer Rohrleitung eingesetzt zu werden, derart, daß ein an den Meßwandler herangeführter Fluidstrom mittels der ersten Fluidleitung, mithin innerhalb des Meßwandlers in zwei separate Fluidströme aufgeteilt wird, und daß nämliche Fluidströme mittels der vierten Fluidleitung, mithin ebenfalls innerhalb des Meßwandlers wieder zu einem einzigen Fluidstrom zusammengeführt werden, so daß der jeweilige Meßwandler strömungstechnisch bzw. nach außen quasi als ein einziges Rohr wirkt und zudem mittels Standardflanschverbindungen sehr einfach und ohne weiteren technischen Aufwand an die korrespondierenden Segmente der Rohrleitung angeschlossen werden kann. Derartige Fluidleitungssysteme bzw. damit gebildete, beispielsweise nämlich dem Generieren von von einer Massendurchflußrate des strömenden Fluids abhängigen Corioliskräften dienliche, vibronische Meßwandler werden u.a. auch von der Anmelderin selbst hergestellt bzw. im Verbund mit einer jeweils passend konfektionierten Meßelektronik als Coriolis-Massendurchfluß-Meßgerät bzw. als Coriolis-Massendurchfluß-/Dichte-Meßgerät, beispielsweise unter der Warenbezeichnung "Promass F 200", "PROMASS G 100", "PROMASS O 100", "PROMASS 83E", "PROMASS 84F", "CNGmass", "LPGmass" oder "Dosimass", angeboten.

Untersuchungen an Fluidleitungssystemen der vorbezeichneten Art haben gezeigt, daß deren zweite und dritte Fluidleitungen gelegentlich, nicht zuletzt für den vorgenannten Fall, daß es sich bei dem Fluid um ein Gas handelt, auch zu Resonanz-Schwingungen signifikant angeregt sein können, die neben der momentanen Dichte nennenswert auch von der momentanen Massendurchflußrate abhängig sind bzw. daß bei bestimmten Massendurchflußraten von der Meß- und Betriebs-Elektronik fälschlicherweise eine solche Resonanzfrequenz als Nutzfrequenz selektiert und angesteuert wird, die nicht der momentanen Resonanzfrequenz des eigentlich als Nutzmode vorgesehenen natürlichen Schwingungsmode entspricht. Damit einhergehend können besonders auch die für die Massendurchflußrate ermittelten Meßwerte in erheblichem, gleichwohl unvorhersehbarem Maße von der tatsächlichen Massendurchflußrate abweichen einhergehend mit einer vergleichsweise hohen Streuung, mithin können nämliche Meßwerte einen zu hohen Meßfehler bzw. eine zu geringe Reproduzierbarkeit aufweisen. Weiterführende Untersuchungen haben hierbei ferner ergeben, daß eine möglich Ursache für die vorbezeichneten Meßfehler darin zu finden ist, daß bei Fluidsystem der in Rede stehenden Art besonderes innerhalb der als Leitungsvereinigung dienlichen vierten Fluidleitung das ausströmende Fluid extrem turbulente Strömungsprofile ausbildet. Dies im besonderen auch in der Weise, daß im Zusammenspiel von Fluidsystem und hindurchströmendem Fluid auslaßseitig regelmäßig eine Schallquelle etabliert ist, die in einem vergleichsweise breitbandigen, nämlich zumeist mehrere Resonanzfrequenzen der Fluidleitung treffenden Frequenzspektrum Schall im Fluid mit vergleichsweise hoher Intensität generiert. Die auslaßseitig im Fluid so induzierten Schallwellen können u.a. auch entgegen der im Fluidsystem etablierten Strömungsrichtung in die zweite bzw. dritte Fluidleitung und weiter in die erste Fluidleitung propagieren und so auslaßseitig konvertierte Schallenergie zu einem erheblichen Anteil via zweite und dritte Fluidleitungen stromaufwärts zur einlaßseitigen ersten Fluidleitung transportieren. Im Ergebnis können gelegentlich im Fluidleitungssystem auch stehende Schallwellen etablieren, mithin kann zumindest vorübergehend ein akustischer Resonator gebildet werden, der Schwingungen mit den jeweiligen Wellenlänge entsprechenden akustischen Resonanzfrequenzen ausführt, derart, daß bei Übereinstimmung einer momentanen Resonanzfrequenz des akustischen Resonators und einer momentanen (mechanischen) Resonanzfrequenz der zweiten und dritten Fluidleitungen letztere nennenswert auch mechanische Schwingungen mit nämlicher Resonanzfrequenz ausführen. Für den regelmäßig nicht auszuschließenden Fall, daß die Resonanzfrequenz der durch Schall induzierten Schwingungen und die Resonanzfrequenz des eigentlichen Nutzmodes innerhalb des von der Treiberschaltung ausgeregelten Frequenzbereichs liegen, kann dann nicht mehr ohne weiteres sichergestellt werden, daß mittels des Schwingungserregers tatsächlich lediglich die Schwingungen im eigentlich angestrebte Nutzmode und nicht stattdessen vorübergehend die vorbezeichneten Schall induzierten Schwingungen aktiv angeregt bzw. aufrechterhalten werden bzw. daß die Messung von Massendurchflußrate und/oder Dichte und/oder Viskosität tatsächlich auf der Resonanzfrequenz des eigentlich vorgesehenen Nutzmodes basieren.

Dem Rechnung tragend besteht eine Aufgabe der Erfindung daher darin, Fluidleitungssystem der vorbezeichneten Art zu verbessern, daß eine Neigung von deren Fluidleitungen, durch Schall induzierte Schwingungen auszuführen, reduziert wird; dies im besonderen auch dafür, um eine Meßgenauigkeit bzw. Reproduzierbarkeit von mittels eines solchen Fluidleitungssystems gebildeten Meßwandlern generierten Meßwerten weiter zu erhöhen.

Zur Lösung der Aufgabe besteht die Erfindung in einem Fluidleitungssystem, umfassend:

- eine - beispielsweise als Anschlußstutzen und/oder als Leitungsverzweigung ausgebildete - erste Fluidleitung mit einem von einer Wandung - beispielsweise aus einem Metall - umhüllten, sich von einer in einem, beispielsweise von einem Anschlußflansch gefaßten, ersten Leitungsende der ersten Fluidleitung verorteten ersten Strömungsöffnung sowohl bis zu einer in einem zweiten Leitungsende nämlicher ersten Fluidleitung verorteten zweiten Strömungsöffnung als auch bis zu einer von nämlicher zweiten Strömungsöffnung beabstandet im zweiten Leitungsende nämlicher ersten Fluidleitung verorteten dritten Strömungsöffnung erstreckenden Lumen;

- eine - beispielsweise als starres und/oder zumindest abschnittsweise kreiszylindrisches Rohr ausgebildete - zweite Fluidleitung mit einem von einer Wandung - beispielsweise aus einem Metall - umhüllten, sich von einer in einem ersten Leitungsende der zweiten Fluidleitung verorteten ersten Strömungsöffnung bis zu einer in einem zweiten Leitungsende nämlicher zweiten Fluidleitung verorteten zweiten Strömungsöffnung erstreckenden Lumen, derart, daß ein größter Strömungsquerschnitt $A_{200,Max}$ der zweiten Fluidleitung sowohl von deren ersten Leitungsende als auch von deren zweiten Leitungsende beabstandet ist;

- wenigstens eine - beispielsweise als starres und/oder zumindest abschnittsweise kreiszylindrisches Rohr ausgebildete und/oder zur zweiten Fluidleitung baugleiche - dritte Fluidleitung mit einem von einer Wandung - beispielsweise aus einem Metall - umhüllten, sich von einer in einem ersten Leitungsende der dritten Fluidleitung verorteten ersten Strömungsöffnung bis zu einer in einem zweiten Leitungsende nämlicher dritten Fluidleitung verorteten zweiten Strömungsöffnung erstreckenden Lumen, derart, daß ein größter Strömungsquerschnitt $A_{300,Max}$ der dritten Fluidleitung sowohl von deren ersten Leitungsende als auch von deren zweiten Leitungsende beabstandet ist;

- sowie eine - beispielsweise zur ersten Fluidleitung baugleiche und/oder als Anschlußstutzen ausgebildete und/oder als Leitungsvereinigung dienliche - vierte Fluidleitung mit einem von einer Wandung - beispielsweise aus einem Metall - umhüllten, sich von einer in einem, beispielsweise von einem Anschlußflansch gefaßten, ersten Leitungsende der vierten Fluidleitung verorteten ersten Strömungsöffnung sowohl bis zu einer in einem zweiten Leitungsende nämlicher vierten Fluidleitung verorteten zweiten Strömungsöffnung als auch bis zu einer von nämlicher zweiten Strömungsöffnung beabstandet im zweiten Leitungsende nämlicher vierten Fluidleitung verorteten dritten Strömungsöffnung erstreckenden Lumen;

- wobei sowohl die zweite Fluidleitung mit deren ersten Leitungsende als auch die dritte Fluidleitung mit deren ersten Leitungsende jeweils mit dem zweiten Leitungsende der ersten Fluidleitung verbunden, beispielsweise nämlich derart, daß sowohl das Lumen der zweiten Fluidleitung als auch das Lumen der dritten Fluidleitung mit dem Lumen der ersten Fluidleitung kommunizieren und/oder derart, daß die erste Strömungsöffnung der zweiten Fluidleitung in die zweite Strömungsöffnung der ersten Fluidleitung und die erste Strömungsöffnung der dritten Fluidleitung in die dritte Strömungsöffnung der ersten Fluidleitung münden;

- und wobei sowohl die zweite Fluidleitung mit deren zweiten Leitungsende als auch die dritte Fluidleitung mit deren zweiten Leitungsende jeweils mit dem zweiten Leitungsende der vierten Fluidleitung verbunden sind , beispielsweise nämlich derart, daß sowohl das Lumen der zweiten Fluidleitung als auch das Lumen der dritten Fluidleitung mit dem Lumen der vierten Fluidleitung kommuniziert und/oder derart, daß die zweite Strömungsöffnung der zweiten Fluidleitung in die zweite Strömungsöffnung der vierten Fluidleitung und die zweite Strömungsöffnung der dritten Fluidleitung in die dritte Strömungsöffnung der vierten Fluidleitung münden.

Beim erfindungsgemäßen Fluidleitungssystem bilden die erste Strömungsöffnung der zweiten Fluidleitung einen einlaßseitigen Strömungsquerschnitt $A_{200a}$ nämlicher Fluidleitung und die zweite Strömungsöffnung der zweiten Fluidleitung einen auslaßseitigen Strömungsquerschnitt $A_{200b}$ nämlicher Fluidleitung und bilden zudem die erste Strömungsöffnung der dritten Fluidleitung einen einlaßseitigen Strömungsquerschnitt $A_{300a}$ nämlicher Fluidleitung und die zweite Strömungsöffnung der dritten Fluidleitung einen auslaßseitigen Strömungsquerschnitt $A_{300b}$ nämlicher Fluidleitung. Darüberhinaus sind beim erfindungsgemäßen Fluidleitungssystem die erste Fluidleitung, die zweite Fluidleitung und die dritte Fluidleitung so ausgebildet, daß ein am zweiten Leitungende der ersten Fluidleitung verorteter, gleichwohl an die zweite Strömungsöffnung sowie die dritte Strömungsöffnung nämlicher Fluidleitung angrenzender auslaßseitiger Strömungsquerschnitt, $A_{100,Min}$ der ersten Fluidleitung, der einlaßseitige Strömungsquerschnitt, $A_{200a}$, der zweiten Fluidleitung sowie der einlaßseitige Strömungsquerschnitt $A_{300a}$ der dritten Fluidleitung insgesamt eine Bedingung:

$$0,8 < \frac{A_{200a} + A_{300a}}{A_{100,Min}}$$

erfüllen und daß nämlicher auslaßseitige Strömungsquerschnitt $A_{100,Min}$ der ersten Fluidleitung, der größte Strömungsquerschnitt $A_{200,Max}$ der zweiten Fluidleitung sowie der größte Strömungsquerschnitt $A_{300,Max}$ der

$$0,9 < \frac{A_{200,Max} + A_{300,Max}}{A_{100,Min}}$$

dritten Fluidleitung insgesamt eine Bedingung: , beispielsweise nämlich zumindest nähe-

$$\frac{A_{200,Max} + A_{300,Max}}{A_{100,Min}} = 1$$

rungsweise eine Bedingung: , erfüllen. Alternativ oder in Ergänzung sind beim erfindungsgemäßen Fluidleitungssystem die erste Fluidleitung, die zweite Fluidleitungund die vierte Fluidleitung so ausgebildet, daß der auslaßseitige Strömungsquerschnitt $A_{200b}$ der zweiten Fluidleitung, der auslaßseitige Strömungsquerschnitt $A_{300b}$ der dritten Fluidleitung sowie ein an am ersten Leitungende der vierten Fluidleitung verorteter, gleichwohl an die zweite Strömungsöffnung sowie die dritte Strömungsöffnung nämlicher Fluidleitung angrenzender einlaßseitiger Strömungs-

$$0,8 < \frac{A_{200b} + A_{300b}}{A_{400,Min}}$$

querschnitt $A_{400,Min}$ der vierten Fluidleitung insgesamt eine Bedingung erfüllen und daß der größte Strömungsquerschnitt $A_{200,Max}$ der zweiten Fluidleitung, der größte Strömungsquerschnitt $A_{300,Max}$ der dritten Fluidleitung sowie nämlicher einlaßseitige Strömungsquerschnitt $A_{400,Min}$ der vierten Fluidleitung insgesamt eine Be-

$$0,9 < \frac{A_{200,Max} + A_{300,Max}}{A_{400,Min}}$$

dingung: , beispielsweise nämlich zumindest näherungsweise eine Bedingung:

$$\frac{A_{200,Max} + A_{300,Max}}{A_{400,Min}} = 1,$$

erfüllen.

Des weiteren besteht die Erfindung darin, ein solches Fluidleitungssystem zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, beispielsweise eines verflüssigtes Gases, wie etwa eines Methan und/oder Ethan und/oder Propan und/oder Buthan enthaltenden Flüssiggases und/oder eines verflüssigten Erdgases (LNG), oder eines komprimierten Gases, beispielsweise nämliche eines komprimierten Erdgases (CNG) zu verwenden.

Nach einer ersten Ausgestaltung der Erfindung ist ferner vorgesehen, daß die erste Fluidleitung, die zweite Fluidleitung und die dritte Fluidleitung so ausgebildet sind, daß der auslaßseitige Strömungsquerschnitt $A_{100,Min}$ der ersten Fluidleitung, der größte Strömungsquerschnitt $A_{200,Max}$ der zweiten Fluidleitung sowie der größte Strömungsquerschnitt $A_{300,Max}$ der dritten Fluidleitung insgesamt eine Bedingung:

$$\frac{A_{200,Max} + A_{300,Max}}{A_{100,Min}} < 1,1$$

erfüllen.

Nach einer zweiten Ausgestaltung der Erfindung ist ferner vorgesehen, daß die zweite Fluidleitung, die dritte Fluidleitung und die vierte Fluidleitung so ausgebildet sind, daß der größte Strömungsquerschnitt $A_{200,Max}$ der zweiten Fluidleitung, der größte Strömungsquerschnitt $A_{300,Max}$ der dritten Fluidleitung sowie der einlaßseitige Strömungsquerschnitt $A_{400,Min}$ der vierten Fluidleitung insgesamt eine Bedingung:

$$\frac{A_{200,Max} + A_{300,Max}}{A_{400,Min}} < 1{,}1$$

erfüllen.

Nach einer dritten Ausgestaltung der Erfindung ist ferner vorgesehen, daß das Lumen der zweiten Fluidleitung abschnittsweise, beispielsweise nämlich in einem sich von deren einlaßseitigen Strömungsquerschnitt $A_{200a}$ in Richtung zu deren größtem Strömungsquerschnitt $A_{200,Max}$ erstreckenden ersten Übergangsbereich und/oder in einem sich von deren auslaßseitigen Strömungsquerschnitt $A_{200b}$ in Richtung zu deren größtem Strömungsquerschnitt $A_{200,Max}$ erstreckenden zweiten Übergangsbereich, kegel- bzw. konusförmig ausgebildet ist, derart, daß aneinandergrenzende Strömungsquerschnitte $A_{200,j}$ der zweiten Fluidleitung, ausgehend von deren einlaßseitigen Strömungsquerschnitt $A_{200a}$ in eine Richtung hin zu deren größtem Strömungsquerschnitt $A_{200,Max}$ kontinuierlich - beispielsweise nämlich linear oder überproportional - zunehmen und/oder derart, daß aneinandergrenzende Strömungsquerschnitte $A_{200,j}$ der zweiten Fluidleitung, ausgehend von deren auslaßseitigen Strömungsquerschnitt $A_{200b}$ in eine Richtung hin zu deren größtem Strömungsquerschnitt $A_{200,Max}$ kontinuierlich - beispielsweise nämlich linear oder überproportional - zunehmen.

Nach einer vierten Ausgestaltung der Erfindung ist ferner vorgesehen, daß das Lumen der dritten Fluidleitung abschnittsweise, beispielsweise nämlich in einem sich von deren einlaßseitigen Strömungsquerschnitt $A_{300a}$ in Richtung zu deren größtem Strömungsquerschnitt $A_{300,Max}$ erstreckenden ersten Übergangsbereich und/oder in einem sich von deren auslaßseitigen Strömungsquerschnitt $A_{300b}$ in Richtung zu deren größtem Strömungsquerschnitt $A_{300,Max}$ erstreckenden zweiten Übergangsbereich, kegel- bzw. konusförmig ausgebildet ist, derart, daß aneinandergrenzende Strömungsquerschnitte $A_{300,j}$ der dritten Fluidleitung, ausgehend von deren einlaßseitigen Strömungsquerschnitt $A_{300a}$ in eine Richtung hin zu deren größtem Strömungsquerschnitt $A_{300,Max}$ kontinuierlich - beispielsweise nämlich linear oder überproportional - zunehmen und/oder derart, daß aneinandergrenzende Strömungsquerschnitte $A_{300,j}$ der dritten Fluidleitung, ausgehend von deren auslaßseitigen Strömungsquerschnitt $A_{300b}$ in eine Richtung hin zu deren größtem Strömungsquerschnitt $A_{300,Max}$ kontinuierlich - beispielsweise nämlich linear oder überproportional - zunehmen.

Nach einer fünften Ausgestaltung der Erfindung sind die zweite Fluidleitung und die dritte Fluidleitung so ausgebildet, daß der größte Strömungsquerschnitt $A_{200,Max}$ der zweiten Fluidleitung und der größte Strömungsquerschnitt $A_{300,Max}$ der dritten Fluidleitung insgesamt eine Bedingung:

$$A_{200,Max} = A_{300,Max}$$

erfüllen.

Nach einer sechsten Ausgestaltung der Erfindung sind die erste Fluidleitung sowie die vierte Fluidleitung so ausgebildet, daß der auslaßseitige Strömungsquerschnitt $A_{100,Min}$ der ersten Fluidleitung und der einlaßseitige Strömungsquerschnitt $A_{400,Min}$ der vierten Fluidleitung insgesamt eine Bedingung: $A_{100,Min} = A_{400,Min}$ erfüllen.

Nach einer siebenten Ausgestaltung der Erfindung ist ferner vorgesehen, daß das Lumen der zweiten Fluidleitung zumindest abschnittsweise, beispielsweise auch überwiegend, kreiszylindrisch ausgebildet ist, und daß der größte Strömungsquerschnitt $A_{200,Max}$ der zweiten Fluidleitung in einem kreiszylindrischem Abschnitt nämlichen Lumens verortet ist.

Nach einer achten Ausgestaltung der Erfindung ist ferner vorgesehen, daß das Lumen der dritten Fluidleitung zumindest abschnittsweise, beispielsweise auch überwiegend, kreiszylindrisch ausgebildet ist, und daß der größte Strömungsquerschnitt $A_{300,Max}$ der dritten Fluidleitung in einem kreiszylindrischem Abschnitt nämlichen Lumens verortet ist.

Nach einer neunten Ausgestaltung der Erfindung sind die zweite Fluidleitung und die dritte Fluidleitung so ausgebildet, daß der einlaßseitige Strömungsquerschnitt $A_{200a}$ der zweiten Fluidleitung sowie der einlaßseitige Strömungsquerschnitt $A_{300a}$ der dritten Fluidleitung eine Bedingung: $A_{200a} = A_{300a}$ erfüllen.

Nach einer zehnten Ausgestaltung der Erfindung ist ferner vorgesehen, daß der auslaßseitige Strömungsquerschnitt $A_{200b}$ der zweiten Fluidleitung sowie der auslaßseitige Strömungsquerschnitt $A_{300b}$ der dritten Fluidleitung eine Bedingung: $A_{200b} = A_{300b}$ erfüllen.

Nach einer elften Ausgestaltung der Erfindung ist ferner vorgesehen, daß der einlaßseitige Strömungsquerschnitt $A_{200a}$ sowie der auslaßseitige Strömungsquerschnitt $A_{200b}$ der zweiten Fluidleitung eine Bedingung: $A_{200a} = A_{200b}$ erfüllen.

Nach einer zwölften Ausgestaltung der Erfindung ist ferner vorgesehen, daß der einlaßseitige Strömungsquerschnitt $A_{300a}$ sowie der auslaßseitige Strömungsquerschnitt $A_{300b}$ der dritten Fluidleitung eine Bedingung: $A_{300a} = A_{300b}$ erfüllen.

Nach einer dreizehnten Ausgestaltung der Erfindung ist ferner vorgesehen, daß der einlaßseitige Strömungsquerschnitt $A_{200a}$ und/oder der auslaßseitige Strömungsquerschnitt $A_{200b}$ der zweiten Fluidleitung einen kleinsten Strömungsquerschnitt $A_{200,Min}$ nämlicher Fluidleitung bilden.

Nach einer vierzehnten Ausgestaltung der Erfindung ist ferner vorgesehen, daß der einlaßseitige Strömungsquerschnitt $A_{300a}$ und/oder der auslaßseitige Strömungsquerschnitt $A_{300b}$ der dritten Fluidleitung einen kleinsten Strömungsquerschnitt $A_{300,Min}$ nämlicher Fluidleitung bilden.

Nach einer fünfzehnten Ausgestaltung der Erfindung ist ferner vorgesehen, daß der auslaßseitige Strömungsquerschnitt $A_{100,Min}$ der ersten Fluidleitung ovalförmig ausgebildet ist.

Nach einer sechzehnten Ausgestaltung der Erfindung ist ferner vorgesehen, daß der einlaßseitige Strömungsquerschnitt $A_{200a}$ der zweiten Fluidleitung ovalförmig oder halbkreisförmig ausgebildet ist.

Nach einer siebzehnten Ausgestaltung der Erfindung ist ferner vorgesehen, daß der einlaßseitige Strömungsquerschnitt $A_{300a}$ der dritten Fluidleitung ovalförmig oder halbkreisförmig ausgebildet ist. Nach einer achtzehnten Ausgestaltung der Erfindung ist ferner vorgesehen, daß der auslaßseitige Strömungsquerschnitt $A_{200b}$ der zweiten Fluidleitung ovalförmig oder halbkreisförmig ausgebildet ist.

Nach einer neunzehnten Ausgestaltung der Erfindung ist ferner vorgesehen, daß der auslaßseitige Strömungsquerschnitt $A_{300b}$ der dritten Fluidleitung ovalförmig oder halbkreisförmig ausgebildet ist.

Nach einer zwanzigsten Ausgestaltung der Erfindung ist ferner vorgesehen, daß der einlaßseitige Strömungsquerschnitt $A_{400,Min}$ der vierten Fluidleitung ovalförmig ausgebildet ist.

Nach einer einundzwanzigsten Ausgestaltung der Erfindung ist ferner vorgesehen, daß die zweite Fluidleitung so ausgebildet ist, daß deren einlaßseitiger Strömungsquerschnitt $A_{200a}$ und deren größter Strömungsquerschnitt $A_{200,Max}$ eine Bedingung:

$$0,7 < \frac{A_{200a}}{A_{200,Max}} < 1 ,$$

insb. nämlich eine Bedingung:

$$0,8 < \frac{A_{200a}}{A_{200,Max}} < 0,95 ,$$

erfüllen.

Nach einer zweiundzwanzigsten Ausgestaltung der Erfindung ist ferner vorgesehen, daß der größte Strömungsquerschnitt $A_{200,Max}$ der zweiten Fluidleitung kreisförmig ausgebildet ist.

Nach einer dreiundzwanzigsten Ausgestaltung der Erfindung ist ferner vorgesehen, daß der größte Strömungsquerschnitt $A_{300,Max}$ der dritten Fluidleitung kreisförmig ausgebildet ist.

Nach einer vierundzwanzigsten Ausgestaltung der Erfindung ist ferner vorgesehen, daß die dritte Fluidleitung so ausgebildet ist, daß deren einlaßseitiger Strömungsquerschnitt $A_{300a}$ und deren größter Strömungsquerschnitt $A_{300,Max}$ eine Bedingung:

$$0,7 < \frac{A_{300a}}{A_{300,Max}} < 1 ,$$

insb. nämlich eine Bedingung:

$$0,8 < \frac{A_{300a}}{A_{300,Max}} < 0,95 ,$$

erfüllen.

Nach einer fünfundzwanzigsten Ausgestaltung der Erfindung ist ferner vorgesehen, daß die zweite Fluidleitung so ausgebildet ist, daß deren auslaßseitiger Strömungsquerschnitt $A_{200b}$ und deren größter Strömungsquerschnitt $A_{200,Max}$ eine Bedingung:

$$0,7 < \frac{A_{200b}}{A_{200,Max}} < 1 ,$$

insb. nämlich eine Bedingung:

$$0.8 < \frac{A_{200b}}{A_{200,Max}} < 0.95 \, ,$$

erfüllen.

Nach einer sechsundzwanzigsten Ausgestaltung der Erfindung ist ferner vorgesehen, daß die dritte Fluidleitung so ausgebildet ist, daß deren auslaßseitiger Strömungsquerschnitt $A_{300b}$ und deren größter Strömungsquerschnitt $A_{300,Max}$ eine Bedingung:

$$0.7 < \frac{A_{300b}}{A_{300,Max}} < 1 \, ,$$

insb. nämlich eine Bedingung:

$$0.8 < \frac{A_{300b}}{A_{300,Max}} < 0.95 \, ,$$

erfüllen.

Nach einer siebenundzwanzigsten Ausgestaltung der Erfindung ist ferner vorgesehen, daß das Lumen der ersten Fluidleitung zumindest abschnittsweise, beispielsweise auch überwiegend, kreiskegel- bzw. konusförmig ausgebildet ist, beispielsweise derart, daß aneinandergrenzende Strömungsquerschnitte $A_{100,i}$ der ersten Fluidleitung, ausgehend von deren auslaßseitigen Strömungsquerschnitt $A_{100,Min}$, in eine Richtung $z_i^+$ hin zum ersten Leitungsende kontinuierlich und/oder gemäß einer Funktion:

$$A_{100,i} = A_{100,Min} \cdot e^{k \cdot z_i}$$

zunehmen; und daß der auslaßseitige Strömungsquerschnitt $A_{100,Min}$ der ersten Fluidleitung in einem kreiskegel- bzw. konusförmigem Abschnitt des Lumens nämlicher Fluidleitung verortet ist.

Nach einer achtundzwanzigsten Ausgestaltung der Erfindung ist ferner vorgesehen, daß das Lumen der vierten Fluidleitung zumindest abschnittsweise, beispielsweise auch überwiegend, kreiskegel- bzw. konusförmig ausgebildet ist, beispielsweise derart, daß aneinandergrenzende Strömungsquerschnitte $A_{400,j}$ der vierten Fluidleitung, ausgehend von deren einlaßseitigen Strömungsquerschnitt $A_{400,Min}$, in eine Richtung $z_j^+$ hin zu deren zweiten Leitungsende kontinuierlich und/oder gemäß einer Funktion:

$$A_{400,j} = A_{400,Min} \cdot e^{k \cdot z_j}$$

zunehmen; und daß der kleinste Strömungsquerschnitt $A_{400,Min}$ der vierten Fluidleitung in einem kreiskegel- bzw. konusförmigem Abschnitt des Lumens nämlicher Fluidleitung verortet ist.

Nach einer neunundzwanzigsten Ausgestaltung der Erfindung ist ferner vorgesehen, daß die erste Strömungsöffnung 100a der ersten Fluidleitung einen einlaßseitigen Strömungsquerschnitt $A_{100a}$ nämlicher Fluidleitung bildet; und daß die erste Strömungsöffnung der vierten Fluidleitung einen auslaßseitigen Strömungsquerschnitt $A_{400a}$ nämlicher Fluidleitung bildet, wobei die erste Fluidleitung und die vierte Fluidleitung so ausgebildet sind, daß der einlaßseitige Strömungsquerschnitt $A_{100a}$ der ersten Fluidleitung einen größten Strömungsquerschnitt $A_{100,Max}$ nämlicher ersten Fluidleitung bildet und/oder daß der auslaßseitige Strömungsquerschnitt $A_{400a}$ einen größten Strömungsquerschnitt $A_{400,Max}$ nämlicher vierten Fluidleitung bildet.

Nach einer dreißigsten Ausgestaltung der Erfindung ist die erste Fluidleitung so ausgebildet, daß deren einlaßseitiger Strömungsquerschnitt $A_{100a}$ sowie deren auslaßseitiger Strömungsquerschnitt $A_{100,Min}$ insgesamt eine Bedingung:

$$1 < \frac{A_{100a}}{A_{100,Min}} \, ,$$

insb. nämlich eine Bedingung:

$$1{,}5 < \frac{A_{100a}}{A_{100,\text{Min}}} \text{ und/oder } \frac{A_{100a}}{A_{100,\text{Min}}} < 3 \,,$$

erfüllen.

Nach einer einunddreißigsten Ausgestaltung der Erfindung ist die vierte Fluidleitung so ausgebildet, daß deren einlaßseitiger Strömungsquerschnitt $A_{400,\text{Min}}$ sowie deren auslaßseitiger Strömungsquerschnitt $A_{400a}$ insgesamt eine Bedingung:

$$1 < \frac{A_{400a}}{A_{400,\text{Min}}} \,,$$

insb. nämlich eine Bedingung:

$$1{,}5 < \frac{A_{400a}}{A_{400,\text{Min}}} \text{ und/oder } \frac{A_{400a}}{A_{400,\text{Min}}} < 3 \,,$$

erfüllen.

Nach einer zweiunddreißigsten Ausgestaltung der Erfindung ist ferner vorgesehen, daß der einlaßseitige Strömungsquerschnitt der ersten Fluidleitung kreisföarmig ausgebildet ist.

Nach einer dreiunddreißigsten Ausgestaltung der Erfindung ist ferner vorgesehen, daß der auslaßseitige Strömungsquerschnitt der vierten Fluidleitung kreisförmig ausgebildet ist.

Nach einer vierunddreißigsten Ausgestaltung der Erfindung ist ferner vorgesehen, daß zumindest die zweite Fluidleitung und die dritte Fluidleitung jeweils Bestandteil eines dem Generieren wenigstens eines mit der wenigstens einen Meßgröße korrespondierenden Meßsignals dienenden Meßwandlers, beispielsweise eines vibronischen Meßwandlers, sind.

Nach einer fünfunddreißigsten Ausgestaltung der Erfindung ist ferner vorgesehen, daß zumindest die zweite Fluidleitung dafür eingerichtet ist, von Fluid durchströmt und währenddessen vibrieren gelassen zu werden. Diese Ausgestaltung der Erfindung weiterbildend ist ferner vorgesehen, daß die dritte Fluidleitung dafür eingerichtet ist, beispielsweise auch simultan zur zweiten Fluidleitung, von Fluid durchströmt und währenddessen, beispielsweise auch simultan zur zweiten Fluidleitung, vibrieren gelassen zu werden.

Nach einer sechsunddreißigsten Ausgestaltung der Erfindung ist ferner vorgesehen, daß die erste Fluidleitung mittels eines, beispielsweise als Leitungsverzweigung oder Leitungsvereinigung ausgebildeten, Verteilerstücks eines Meßwandlers, beispielsweise eines vibronischen Meßwandlers und/oder eines Meßwandlers eines Coriolis-Massendurchfluß-Meßgeräts, gebildet ist.

Nach einer siebenunddreißigsten Ausgestaltung der Erfindung ist ferner vorgesehen, daß mittels der ersten Fluidleitung ein, beispielsweise als Leitungsverzweigung oder Leitungsvereinigung ausgebildetes, Verteilerstück eines Meßwandlers, beispielsweise eines vibronischen Meßwandlers und/oder eines Meßwandlers eines Coriolis-Massendurchfluß-Meßgeräts, gebildet ist.

Nach einer achtunddreißigsten Ausgestaltung der Erfindung ist ferner vorgesehen, daß die vierte Fluidleitung mittels eines, beispielsweise als Leitungsverzweigung oder Leitungsvereinigung ausgebildeten, Verteilerstücks eines Meßwandlers, beispielsweise eines vibronischen Meßwandlers und/oder eines Meßwandlers eines Coriolis-Massendurchfluß-Meßgeräts, gebildet ist.

Nach einer neununddreißigsten Ausgestaltung der Erfindung ist ferner vorgesehen, daß mittels der vierten Fluidleitung ein, beispielsweise als Leitungsverzweigung oder Leitungsvereinigung ausgebildetes, Verteilerstück eines Meßwandlers, beispielsweise eines vibronischen Meßwandlers und/oder eines Meßwandlers eines Coriolis-Massendurchfluß-Meßgeräts, gebildet ist.

Nach einer ersten Weiterbildung der Erfindung umfaßt das Fluidleitungssystem weiters: ein Schutzgehäuse für die zweite Fluidleitung und die dritte Fluidleitung, wobei das Schutzgehäuse eine von einer Wandung, beispielsweise aus einem Metall, umhüllte Kavität aufweist, innerhalb der die zweite Fluidleitung und zumindest die dritte Fluidleitung plaziert sind. Nach einer Ausgestaltung dieser Weiterbildung der Erfindung sind ein erstes Gehäuseende des Schutzgehäuses mittels der ersten Fluidleitung und ein zweites Gehäuseende des Schutzgehäuses mittels der vierten Fluidleitung gebildet, beispielsweise auch derart, daß sowohl die erste Fluidleitung als auch die vierte Fluidleitung integraler Bestandteil des Schutzgehäuses ist und/oder daß das Schutzgehäuse eine die Kavität seitlich begrenzende Seitenwand aufweist, die seitlich sowohl an der ersten Fluidleitung als auch an der vierten Fluidleitung fixiert bzw. sowohl mit der ersten Fluidleitung als auch mit der vierten Fluidleitung stoffschlüssig verbunden ist.

Nach einer zweiten Weiterbildung der Erfindung umfaßt das Fluidleitungssystem weiters: wenigstens einen, beispielsweise elektrodynamischen, Schwingungserreger zum Anregen bzw. Aufrechterhalten mechanischer Schwingungen, beispielsweise nämlich Biegeschwingungen, zumindest der zweiten Fluidleitung, beispielsweise auch zum Anregen bzw. Aufrechterhalten mechanischer Schwingungen sowohl der zweiten Fluidleitung als auch der dritten Fluidleitung.

Nach einer dritten Weiterbildung der Erfindung umfaßt das Fluidleitungssystem weiters: wenigstens einen, insb. zumindest an der zweiten Fluidleitung angebrachten und/oder zumindest in deren Nähe plazierten und/oder elektrodynamischen, ersten Sensor zum Erzeugen wenigstens eines mit einer Meßgröße eines im Fluidleitungssystem geführten Fluids korrespondierenden, nämlich wenigsten einen von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden ersten Meßsignals.

Nach einer vierten Weiterbildung der Erfindung umfaßt das Fluidleitungssystem weiters: einen, insb. zumindest an der zweiten Fluidleitung angebrachten und/oder zumindest in deren Nähe plazierten und/oder elektrodynamischen, ersten Sensor zum Erzeugen wenigstens eines mit einer Meßgröße eines im Fluidleitungssystem geführten Fluids korrespondierenden, nämlich wenigsten einen von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden ersten Meßsignals, sowie wenigstens einen, insb. zumindest an der zweiten Fluidleitung angebrachten und/oder zumindest in deren Nähe plazierten und/oder elektrodynamischen und/oder zum ersten Sensor baugleichen, zweiten Sensor zum Erzeugen wenigstens eines mit der Meßgröße korrespondierenden, nämlich wenigsten einen von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden zweiten Meßsignals.

Nach einer fünften Weiterbildung der Erfindung umfaßt das Fluidleitungssystem weiters: einen, insb. zumindest an der zweiten Fluidleitung angebrachten und/oder zumindest in deren Nähe plazierten und/oder elektrodynamischen, ersten Sensor zum Erzeugen wenigstens eines mit einer Meßgröße eines im Fluidleitungssystem geführten Fluids korrespondierenden, nämlich wenigsten einen von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden ersten Meßsignals, sowie eine mit dem ersten Sensor elektrisch gekoppelte Meß- und Betriebselektronik. Nach einer Ausgestaltung dieser Weiterbildung der Erfindung ist die Meß- und Betriebselektronik dafür eingerichtet, das wenigstens erste Meßsignal zu verarbeiten, beispielsweise nämlich mittels des ersten Meßsignals Meßwerte für die wenigstens eine Meßgröße zu ermitteln.

Nach einer sechsten Weiterbildung der Erfindung umfaßt das Fluidleitungssystem weiters: wenigstens einen, beispielsweise elektrodynamischen, Schwingungserreger zum Anregen bzw. Aufrechterhalten mechanischer Schwingungen, beispielsweise nämlich Biegeschwingungen, zumindest der zweiten Fluidleitung, beispielsweise auch zum Anregen bzw. Aufrechterhalten mechanischer Schwingungen sowohl der zweiten Fluidleitung als auch der dritten Fluidleitung; einen, insb. zumindest an der zweiten Fluidleitung angebrachten und/oder zumindest in deren Nähe plazierten und/oder elektrodynamischen, ersten Sensor zum Erzeugen wenigstens eines mit einer Meßgröße eines im Fluidleitungssystem geführten Fluids korrespondierenden, nämlich wenigsten einen von nämlicher Meßgröße abhängigen Signalparameter, beispielsweise einen von nämlicher Meßgröße abhängigen Signalpegel und/oder eine von nämlicher Meßgröße abhängige Signalfrequenz und/oder einen von nämlicher Meßgröße abhängigen Phasenwinkel, aufweisenden ersten Meßsignals, sowie eine sowohl mit dem Schwingungserreger als auch dem ersten Sensor elektrisch gekoppelte Meß- und Betriebselektronik, wobei die Meß- und Betriebselektronik dafür eingerichtet ist, ein elektrische Anregungssignal in den Schwingungserreger einzuspeisen, und wobei der Schwingungserreger dafür eingerichtet ist, mittels des Anregungssignals eingespeiste elektrische Leistung in mechanische Schwingungen zumindest der zweiten Fluidleitung, insb. sowohl der zweiten Fluidleitung als auch der dritten Fluidleitung, bewirkende mechanische Leistung zu wandeln. Nach einer Ausgestaltung dieser Weiterbildung der Erfindung ist die Meß- und Betriebselektronik ferner auch dafür eingerichtet, das wenigstens erste Meßsignal zu verarbeiten, beispielsweise nämlich mittels des ersten Meßsignals Meßwerte für die wenigstens eine Meßgröße zu ermitteln.

Ein Grundgedanke der Erfindung besteht darin, einen Verlauf der im Fluidleitungssystem etablierten akustischen Wellenimpedanz in Durchströmungsrichtung dahingehend zu verbessern, daß auch in einem einlaßseitigen Übergangsbereich zwischen der ersten Fluidleitung und den zweiten und dritten Fluidleitungen bzw. in einem auslaßseitigen Übergangsbereich zwischen der vierten Fluidleitung und den zweiten und dritten Fluidleitungen möglichst wenig und/oder nur sehr geringfügige Impedanzsprünge ausgebildet sind. Untersuchungen an konventionellen Fluidleitungssystemen der in Rede stehenden Art, nämlich an Fluidleitungssystemen, bei denen die Fluidleitungen so ausgebildet sind, daß der auslaßseitige Strömungsquerschnitt, $A_{100,Min}$, der ersten Fluidleitung, der einlaßseitige Strömungsquerschnitt, $A_{200a}$,

der auslaßseitige Strömungsquerschnitt, $A_{200b}$, bzw. der größte Strömungsquerschnitt, $A_{200,Max}$, der zweiten Fluidleitung, der einlaßseitige Strömungsquerschnitt, $A_{300a}$, der auslaßseitige Strömungsquerschnitt, $A_{300b}$, bzw. der größte Strömungsquerschnitt, $A_{300,Max}$, der dritten Fluidleitung sowie der einlaßseitige Strömungsquerschnitt, $A_{400,Min}$, der vierten Fluidleitung insgesamt eine der Bedingungen:

$$\frac{A_{200a} + A_{300a}}{A_{100,Min}} < 0{,}5 \text{ , bzw.}$$

$$\frac{A_{200a} + A_{300a}}{A_{400,Min}} < 0{,}5 \text{ ,}$$

und/oder eine der Bedingungen:

$$\frac{A_{200,Max} + A_{300,Max}}{A_{100,Min}} < 0{,}5 \text{ bzw.}$$

$$\frac{A_{200,Max} + A_{300,Max}}{A_{400,Min}} < 0{,}5$$

erfüllen, haben nämlich gezeigt, daß besonders auch die vorbezeichneten Übergangsbereiche sehr große Impedanzsprünge aufweisen bzw. verursachen können. Im Ergebnis dessen können im durch ein solches Fluidleitungssystem strömenden Fluid propagierende Schallwellen ohne weiteres mehrfach reflektiert werden, einhergehend mit einer erhöhten Wahrscheinlichkeit der Ausprägung stehender Schallwellen innerhalb der zweiten und dritten Fluidleitungen. Überraschenderweise konnte weiter festgestellt werden, daß nämliche Impedanzsprünge aber sehr einfach, gleichwohl sehr wirksam dadurch minimiert werden können, mithin die Neigung von Fluidleitungssystemen der in Rede stehenden zu Schall induzierten Resonanzschwingungen dadurch signifikant verringert werden kann, indem die zweiten und dritten Fluidleitungen jeweils einen im Vergleich zu konventionellen Fluidleitungssystemen gegenüber den ersten und vierten Fluidleitungen entsprechend vergrößerte Strömungsquerschnitte aufweisen. Dies weitgehend auch innerhalb der für konventionelle Fluidleitungssystemen bislang etablierter Einbaumaße, insb. nämlich einer vom ersten Leitungsende der ersten Fluidleitung bis ersten Leitungsende der vierten Fluidleitung gemessen Einbaulänge bzw. auch einem daraus resultierenden Einbaugewicht. Bei Vermeidung von abrupten oder extremen Formänderungen zwischen in Durchströmungsrichtung benachbarten Strömungsquerschnitten sind die eigentliche Form der einzelnen Strömungsquerschnitte ansonsten von vergleichsweise geringer Bedeutung, mithin können die Strömungsquerschnitte an und für sich weitgehend frei an andere bauliche Vorgaben für das jeweilige Fluidleitungssystem angepaßt bzw. anderen baulichen Zwängen bei der Konstruktion des nämlichen Fluidleitungssystems untergeordnet werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.
Im einzelnen zeigen:

Fig. 1       schematisiert in einer Seitenansicht ein, insb. dem Messen wenigstens einer physikalischen Meßgröße eines in einer Rohrleitung strömenden Fluids dienliches, Fluidleitungssystem;

Fig. 2       schematisiert in einer Seitenansicht ein weiteres Ausführungsbeispiel eines dem Messen wenigstens einer physikalischen Meßgröße dienlichen, insb. nämlich als vibronischer Meßwandler ausgebildeten, Fluidleitungssystems;

Fig. 3a, 3b,       schematisiert verschiedene Strömungsquerschnitte von Fluidleitungen eines Fluidleitungssystems gemäß Fig. 1; und

Fig. 4       Verläufe von Strömungsquerschnitten von Fluidleitungen eines Fluidleitungssystems gemäß Fig. 1.

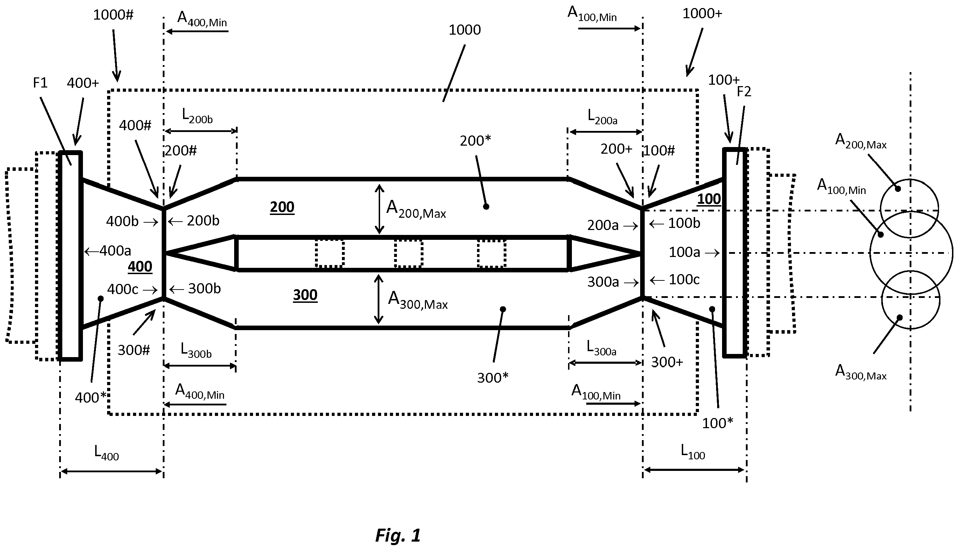

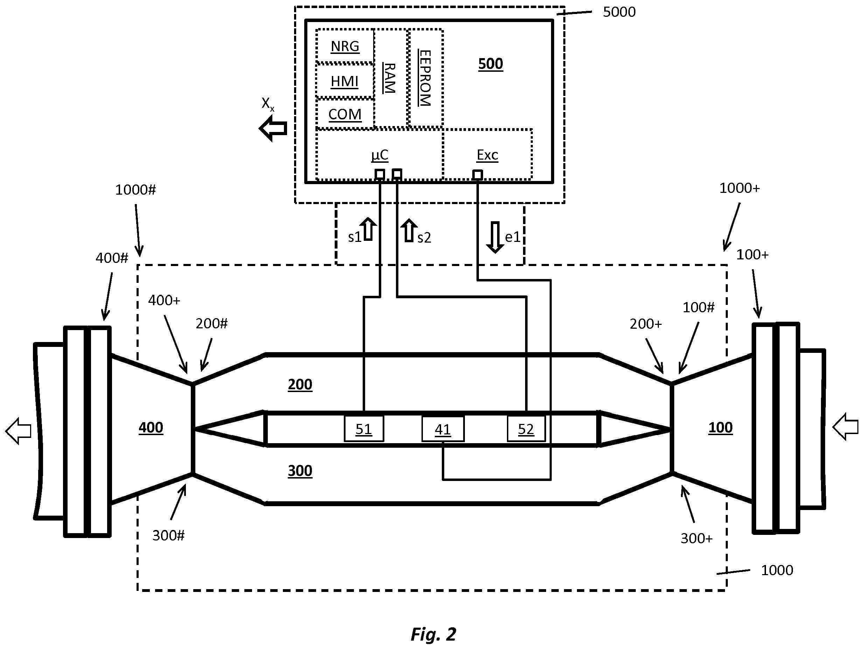

In der Fig. 1 bzw. 2 ist schematisiert jeweils ein Ausführungsbeispiel eines dem Führen eines strömenden Fluids, beispielsweise nämlich einer Flüssigkeit, einem Gas oder einer Dispersion, dienliches Fluidleitungssystem gezeigt. Das Fluidleitungssystem ist jeweils im besonderen dafür eingerichtet, das - beispielsweise über ein angeschlossenes Zuleitungssegment einer Rohrleitung - herangeführte Fluid in wenigstens zwei Teilströme aufzuteilen, diese in einer Durchströmungsrichtung des Fluidleitungssystem weiter entlang zweier paralleler Strömungspfade zu führen und hernach nämliche Teilströme wieder zu einem gemeinsamen Fluidstrom zusammenzuführen und diesen wieder - beispielsweise an ein angeschlossenes Ableitungssegment der vorbezeichneten Rohrleitung - abzugeben. Nach einer weiteren Ausgestaltung der Erfindung ist das Fluidleitungssystem ferner auch dafür vorgesehen bzw. eingerichtet, zum Ermitteln von Meßwerten für wenigstens eine Meßgröße - beispielsweise nämlich einer Massendurchflußrate, eines Massendurchflusses, einer Volumendurchflußrate, eines Volumendurchflusses, einer Dichte, einer Viskosität oder einer Temperatur - eines zu transferierenden Fluids verwendet zu werden bzw. ein entsprechendes Meßsystem zu bilden. Bei dem zu transferierenden Fluid kann es sich beispielsweise um eine Flüssigkeit, ein Gas oder eine Dispersion handeln; ein mittels des erfindungsgemäßen Fluidleitungssystem zu transferierendes Fluid kann demnach beispielsweise ein verflüssigtes Gas, wie z.B. ein verflüssigten Erdgas (LNG), oder beispielsweise auch ein komprimiertes Gas, wie z.B. ein komprimiertes Erdgas (CNG), sein. Das Fluidleitungssystem kann demnach, wie u.a. auch in Fig. 2 angedeutet, beispielsweise auch integraler Bestandteil eines, beispielsweise vibronischen, Meßwandlers bzw. eines entsprechenden, beispielsweise auch als ein vorkonfektioniertes In-Line-Meßgerät ausgebildeten, Meßsystems sein.

Das Fluidleitungssystem umfaßt eine - beispielsweise als Anschlußstutzen ausgebildete - erste Fluidleitung 100, eine - beispielsweise als starres und/oder zumindest abschnittsweise kreiszylindrisches Rohr ausgebildete - zweite Fluidleitung 200, eine - beispielsweise als starres und/oder zumindest abschnittsweise kreiszylindrisches Rohr ausgebildete und/oder zur Fluidleitung 200 baugleiche - dritte Fluidleitung 300 sowie eine - beispielsweise als Anschlußstutzen ausgebildete und/oder zur Fluidleitung 100 baugleiche - vierte Fluidleitung 400. Jede der vorbezeichneten Fluidleitungen 100, 200, 300, 400 weist jeweils ein von einer Wandung - beispielsweise aus einem Metall - umhülltes Lumen 100*, 200*, 300* bzw. 400* auf, wobei sich das Lumen 100* der Fluidleitung 100 von einer in einem ersten Leitungsende 100+ der Fluidleitung 100 verorteten ersten Strömungsöffnung 100a sowohl bis zu einer in einem zweiten Leitungsende 100# nämlicher ersten Fluidleitung 100 verorteten zweiten Strömungsöffnung 100b als auch bis zu einer von nämlicher zweiten Strömungsöffnung 100b beabstandet im zweiten Leitungsende 100# nämlicher ersten Fluidleitung 100 verorteten dritten Strömungsöffnung 100c, das Lumen 200* der Fluidleitung 200 von einer in einem ersten Leitungsende 200+ der Fluidleitung 200 verorteten ersten Strömungsöffnung 200a bis zu einer in einem zweiten Leitungsende 200# nämlicher Fluidleitung 200 verorteten zweiten Strömungsöffnung 200b, das Lumen 300* der Fluidleitung 300 von einer in einem ersten Leitungsende 300+ der Fluidleitung 300 verorteten ersten Strömungsöffnung 300a bis zu einer in einem zweiten Leitungsende 300# nämlicher Fluidleitung 300 verorteten zweiten Strömungsöffnung 300b bzw. das Lumen 400* der Fluidleitung 400 von einer in einem ersten Leitungsende 400+ der Fluidleitung 400 verorteten ersten Strömungsöffnung 400a sowohl bis zu einer in einem zweiten Leitungsende 400# nämlicher Fluidleitung 400 verorteten zweiten Strömungsöffnung 400b als auch bis zu einer von nämlicher zweiten Strömungsöffnung 400b beabstandet im zweiten Leitungsende 400# nämlicher vierten Fluidleitung 400 verorteten dritten Strömungsöffnung 400c erstrecken. Sowohl die Fluidleitung 200 als auch die Fluidleitung 300 sind mit deren jeweiligen ersten Leitungsende 200+ bzw. 300+ jeweils mit dem Leitungsende 100# der Fluidleitung 100 und mit deren jeweiligen zweiten Leitungsende 200# bzw. 300# jeweils mit dem Leitungsende 400# der Fluidleitung 400 verbunden; dies im besonderen in der Weise, daß sowohl das Lumen der Fluidleitung 200 als auch das Lumen der Fluidleitung 300 mit dem Lumen der Fluidleitung 100 bzw. dem Lumen der Fluidleitung 400 kommunizierten, bzw. daß die Strömungsöffnung 200a der Fluidleitung 200 in die Strömungsöffnung 100b der Fluidleitung 100 und die Strömungsöffnung 300a der Fluidleitung 300 in die Strömungsöffnung 100c der Fluidleitung 100 münden und/oder daß die Strömungsöffnung 200b der Fluidleitung 200 in die Strömungsöffnung 400b der Fluidleitung 400 und die Strömungsöffnung 300b der Fluidleitung 300 in die Strömungsöffnung 400c der Fluidleitung 400 münden. Die Strömungsöffnungen 200a, 200b, 300a, 300b, 100b, 100c, 400c, 400d können jeweils beispielsweise kreisförmig, halbkreisförmig oder - wie auch in Fig. 2a bzw. 2b angedeutet - ovalförmig ausgebildet sein. Nach einer weiteren Ausgestaltung der Erfindung sind die Strömungsöffnung 100a bzw. ein dadurch gebildeter einlaßseitiger Strömungsquerschnitt $A_{100a}$ der Fluidleitung 100 und/oder die Strömungsöffnung 100a bzw. ein dadurch gebildeter auslaßseitige Strömungsquerschnitt $A_{400a}$ der Fluidleitung 400 zudem kreisförmig ausgebildet. Das Lumen der zweiten und dritten Fluidleitungen 200, 300 kann jeweils zumindest abschnittsweise, insb. auch überwiegend, kreiszylindrisch ausgebildet sein. Darüberhinaus kann das Lumen der zweiten und dritten Fluidleitungen 200, 300 jeweils abschnittsweise auch kegel- bzw. konusförmig ausgebildet sein, beispielsweise jeweils in einem an die jeweilige Strömungsöffnung 200a, 200b, 300a bzw. 300b angrenzenden Übergangsbereich.

Die Wandung der Fluidleitungen 100, 200, 300, 400 können wie bei Fluidleitungssystemen der in Rede stehenden Art durchaus üblich zumindest anteilig aus einem - insb. zumindest hinsichtlich einer spezifischen thermischen Ausdehnung zum Material der jeweils anderen Fluidleitungen kompatiblen - Metall, beispielsweise nämlich Titan, Zirkonmium, einem Edelstahl oder einer Nickelbasislegierung, bestehen. Das Lumen der Fluidleitung 100 bzw. der der Fluidleitung 400, können zudem nach Art eines Lumens eines Sammelstücks jeweils im wesentlichen Y-förmig oder nach Art eines Lumens eines T-Stücks jeweils im wesentlichen T-förmig ausgebildet sein. Nicht zuletzt für den vorbeschriebenen Fall, daß das Fluidleitungssystem dafür vorgesehen ist, in den Verlauf einer Rohrleitung eingegliedert zu werden bzw. daß die ersten und/oder vierten Fluidleitungen 100, 400 als Anschlußstutzen ausgebildet sind, können - wie auch in Fig. 1 bzw. 2 schematisch dargestellt - das Leitungsende 100+ der Fluidleitung 100 bzw. die dort verortetet Strömungsöffnung 100a und/oder das Leitungsende 400+ der Fluidleitung 400 bzw. die dort verortetet Strömungsöffnung 400a zudem jeweils auch von einem zu einem an der vorbezeichneten Rohrleitung ggf. vorgesehenen Anschlußflansch kompatiblen Anschlußflansch F1 bzw. F2 gefaßt sein.

Jede der beiden Fluidleitungen 200, 300 ist ferner so ausgebildet, daß sie entlang der im Fluidleitungssystem etablierten Strömungspfade bzw. in Durchströmungsrichtung des Fluidleitungssystems jeweils verschiedene - nämlich verschieden große und/oder verschieden geformte - Strömungsquerschnitte aufweist, derart, daß jede der Fluidleitungen 200, 300 jeweils einander benachbarte Strömungsquerschnitte mit voneinander abweichender Form und/oder voneinander abweichender Größe aufweist. Nach einer weiteren Ausgestaltung der Erfindung bilden hierbei die erste Strömungsöffnung 200a der Fluidleitung 200 einen - beispielsweise kreisförmigen, halbkreisförmigen oder ovalförmigen - einlaßseitigen Strömungsquerschnitt $A_{200a}$ nämlicher Fluidleitung 200 und die zweite Strömungsöffnung 200b der Fluidleitung 200 einen - beispielsweise kreisförmigen, halbkreisförmigen oder ovalförmigen - auslaßseitigen Strömungsquerschnitt $A_{200b}$ nämlicher Fluidleitung 200, die erste Strömungsöffnung 300a der Fluidleitung 300 einen Strömungsquerschnitt $A_{300a}$ nämlicher Fluidleitung 300 und die zweite Strömungsöffnung 300b der Fluidleitung 300 einen - beispielsweise kreisförmigen, halbkreisförmigen oder ovalförmigen - auslaßseitigen Strömungsquerschnitt $A_{300b}$ nämlicher Fluidleitung 300. Darüberhinaus sind nämliche Fluidleitungen 200, 300 des erfindungsgemäßen Fluidleitungssystems ferner so ausgestaltet, daß - wie auch in Fig. 1a schematisch dargestellt - jeweils ein jeweiliger größter Strömungsquerschnitt $A_{200,Max}$ bzw. $A_{300,Max}$ der jeweiligen Fluidleitung 200 bzw. 300 sowohl von deren jeweiligen ersten Leitungsende 200+ bzw. 300+ als auch von deren jeweiligen zweiten Leitungsende 200# bzw. 300# beabstandet ist.

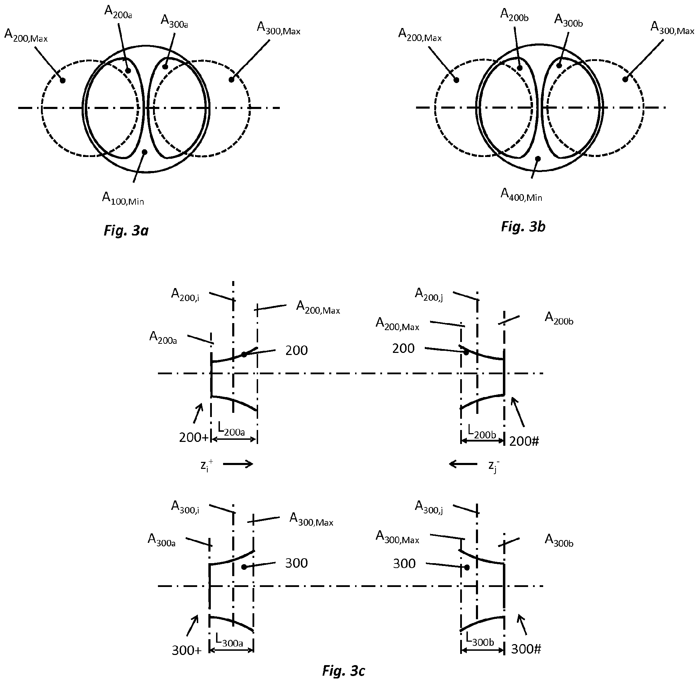

Jeder der vorbezeichneten Strömungsquerschnitte $A_{200a}$, $A_{300a}$, $A_{200b}$, $A_{300b}$ der zweiten bzw. dritten Fluidleitung 200, 300 kann - wie bereits angedeutet - kreisförmig, halbkreisförmig oder - wie auch in Fig. 3a bzw. 3b schematisch dargestellt - beispielsweise ovalförmig ausgebildet sein, beispielsweise auch derart, daß nämliche Strömungsquerschnitte $A_{200a}$, $A_{300a}$, $A_{200b}$, $A_{300b}$ jeweils gleich geformt und jeweils gleichgroß sind. Dementsprechend sind nach einer weiteren Ausgestaltung der Erfindung die Fluidleitung 200 und die Fluidleitung 300 so ausgebildet, daß deren Strömungsquerschnitte $A_{200a}$, $A_{300a}$, $A_{200b}$ bzw. $A_{300b}$ zumindest eine der Bedingungen: $A_{200a} = A_{300a}$ , $A_{200b} = A_{300b}$ , $A_{200a} = A_{200b}$ bzw. $A_{300a} = A_{300b}$ erfüllen. Nach einer weiteren Ausgestaltung der Erfindung ist das Lumen der Fluidleitung 200 zumindest abschnittsweise, insb. auch überwiegend, kreiszylindrisch ausgebildet, und ist zudem der größte Strömungsquerschnitt $A_{200,Max}$ der der Fluidleitung 200 in einem kreiszylindrischem Abschnitt nämlichen Lumens verortet und/oder ist das Lumen der Fluidleitung 300 zumindest abschnittsweise, insb. überwiegend, kreiszylindrisch ausgebildet und ist der größte Strömungsquerschnitt $A_{300,Max}$ der Fluidleitung 300 in einem kreiszylindrischem Abschnitt nämlichen Lumens verortet. Dementsprechend ist der größte Strömungsquerschnitt $A_{200,Max}$ der Fluidleitung 200 bzw. der größte Strömungsquerschnitt $A_{300,Max}$ der Fluidleitung 300 kreisförmig ausgebildet. Die zweiten und dritten Fluidleitungen 200, 300 können zudem so ausgebildet sein, daß der größte Strömungsquerschnitt $A_{200,Max}$ der Fluidleitung 200 und der größte Strömungsquerschnitt $A_{300,Max}$ der Fluidleitung 300 gleichgroß sind, nämlich insgesamt eine Bedingung: $A_{200,Max} = A_{300,Max}$ erfüllen.

Wie bereits erwähnt, ist eine Neigung des vorbezeichneten Fluidleitungssystems - nicht zuletzt auch von dessen Fluidleitungen 200, 300 - zu Resonanzschwingungen, die durch im hindurchströmenden Fluid propagierendem Schall bzw. durch im hindurchströmenden Fluid etablierten stehenden Schallwellen induziert sind, im besonderen durch einen Verlauf von im Fluidleitungssystem in Durchströmungsrichtung ausgebildeten akustischen Wellen- bzw. Flußimpedanzen mitbestimmt. Nämlicher Verlauf der akustischen Wellenimpedanzen ist letztlich auch davon abhängig, in welchem Maße einander in Durchströmungsrichtung benachbarte Strömungsquerschnitte der Fluidleitungen hinsichtlich Größe und/oder Form voneinander abweichen. Durch weiterführende Untersuchungen konnten hierbei ein zwischen der ersten Fluidleitung 100 und den zweiten bzw. dritten Fluidleitungen 200, 300 verorteter einlaßseitiger Übergangsbereich bzw. ein zwischen der vierten Fluidleitung 400 und den zweiten bzw. dritten Fluidleitungen 200, 300 verorteter auslaßseitiger Übergangsbereich als für die Ausbildung stehender Schallwellen im Fluidleitungssystem besonders kritisch identifiziert werden. Zwecks Vermeidung von kritischen Impedanzsprüngen, nämlich von abrupten, gleichwohl stehende Schallwellen innerhalb der zweiten und dritten Fluidleitungen 200, 300 provozierenden Änderungen der akustischen Wellenimpedanzen des Fluidleitungssystems entlang von dessen Durchströmungsrichtung sind die erste Fluidleitung 100, die zweite Fluidleitung 200 und die dritte Fluidleitung 300 beim erfindungsgemäßen Fluidleitungssystem so ausgebildet, daß ein am Leitungsende 100# der Fluidleitung 100 verorteter, gleichwohl an die Strömungsöffnung 100b sowie die Strömungsöffnung 100c nämlicher Fluidleitung 100 angrenzender auslaßseitiger Strömungsquerschnitt $A_{100,Min}$ der Fluidleitung 100, der einlaßseitige Strömungsquerschnitt $A_{200a}$ der Fluidleitung 200 sowie der einlaßseitige Strömungsquerschnitt $A_{300a}$ der Fluidleitung 300 insgesamt eine Bedingung:

$$0,8 < \frac{A_{200a} + A_{300a}}{A_{100,Min}} \qquad (1)$$

erfüllen, und daß nämlicher auslaßseitige Strömungsquerschnitt $A_{100,Min}$, der größte Strömungsquerschnitt $A_{200,Max}$ der Fluidleitung 200 sowie der größte Strömungsquerschnitt $A_{300,Max}$ der zweiten bzw. dritten Fluidleitung 200, 300 insgesamt eine Bedingung:

$$0,9 < \frac{A_{200,Max} + A_{300,Max}}{A_{100,Min}} \qquad (2)$$

erfüllen, bzw. sind die zweite Fluidleitung 200, die dritte Fluidleitung 300 und die vierte Fluidleitung 400 beim erfindungsgemäßen Fluidleitungssystem so ausgebildet, daß der auslaßseitige Strömungsquerschnitt $A_{200b}$ der Fluidleitung 200, der auslaßseitige Strömungsquerschnitt $A_{300b}$ der Fluidleitung 300 sowie ein an am Leitungsende 400+ der Fluidleitung 400 verorteter, gleichwohl an die Strömungsöffnung 400b sowie die Strömungsöffnung 400c nämlicher Fluidleitung 400 angrenzender einlaßseitiger Strömungsquerschnitt $A_{400,Min}$ der Fluidleitung 400 insgesamt eine Bedingung:

$$0,8 < \frac{A_{200b} + A_{300b}}{A_{400,Min}} \qquad (3)$$

erfüllen und daß der größte Strömungsquerschnitt $A_{200,Max}$ der Fluidleitung 200, der größte Strömungsquerschnitt $A_{300,Max}$ der Fluidleitung 300 sowie nämlicher einlaßseitige Strömungsquerschnitt $A_{400,Min}$ der Fluidleitung 400 insgesamt eine Bedingung:

$$0,9 < \frac{A_{200,Max} + A_{300,Max}}{A_{400,Min}} \qquad (4)$$

erfüllen.

Zur Vermeidung bzw. Reduzierung von potenziell Schall im hindurchströmenden Fluid induzierenden Störquellen innerhalb der vorbezeichneten ein- bzw. auslaßseitigen Übergangsbereiche ist nach einer weiteren Ausgestaltung der Erfindung das Lumen der Fluidleitung 200 abschnittsweise, nämlich in einem sich von deren einlaßseitigen Strömungsquerschnitt $A_{200a}$ in Richtung zu deren größtem Strömungsquerschnitt $A_{200,Max}$ erstreckenden ersten Übergangsbereich der Fluidleitung 200 und/oder in einem sich von deren auslaßseitigen Strömungsquerschnitt $A_{200b}$ in Richtung zu deren größtem Strömungsquerschnitt $A_{200,Max}$ erstreckenden zweiten Übergangsbereich der Fluidleitung 200, kegel- bzw. konusförmig ausgebildet, derart, daß aneinandergrenzende Strömungsquerschnitte $A_{200,j}$ der Fluidleitung 200, ausgehend von deren einlaßseitigen Strömungsquerschnitt $A_{200a}$ in eine Richtung $z_j^+$ hin zu deren größtem Strömungsquerschnitt $A_{200,Max}$ kontinuierlich, beispielsweise nämlich linear oder -wie in Fig. 3c angedeutet - überproportional, zunehmen, bzw. daß aneinandergrenzende Strömungsquerschnitte $A_{200,j}$ der Fluidleitung 200, ausgehend von deren auslaßseitigen Strömungsquerschnitt $A_{200b}$ in eine Richtung $z_j^-$ hin zu deren größtem Strömungsquerschnitt $A_{200,Max}$ kontinuierlich- beispielsweise linear oder überproportional - zunehmen. Darüberhinaus ist nach einer weiteren Ausgestaltung das Lumen der Fluidleitung 300 abschnittsweise, nämlich in einem sich von deren einlaßseitigen Strömungsquerschnitt $A_{300a}$ in Richtung zu deren größtem Strömungsquerschnitt $A_{300,Max}$ erstreckenden ersten Übergangsbereich der Fluidleitung 300 und/oder in einem sich von deren auslaßseitigen Strömungsquerschnitt $A_{300b}$ in Richtung zu deren größtem Strömungsquerschnitt $A_{300,Max}$ erstreckenden zweiten Übergangsbereich der Fluidleitung 300, kegel- bzw. konusförmig ausgebildet ist, derart, daß aneinandergrenzende Strömungsquerschnitte $A_{300,j}$ der Fluidleitung 300, ausgehend von deren einlaßseitigen Strömungsquerschnitt $A_{300a}$ in Richtung $z_j^+$ hin zu deren größtem Strömungsquerschnitt $A_{300,Max}$ kontinuierlich, beispielsweise linear oder überproportional, zunehmen bzw. derart, daß aneinandergrenzende Strömungsquerschnitte $A_{300,j}$ der Fluidleitung 300, ausgehend von deren auslaßseitigen Strömungsquerschnitt $A_{300b}$ in Richtung $z_j^-$ hin zu deren größtem Strömungsquerschnitt $A_{300,Max}$ kontinuierlich, insb. linear oder überproportional, zunehmen. Desweiteren können die Fluidleitungen 200, 300 in vorteilhafter Weise so ausgebildet sein, daß sowohl eine Länge $L_{200a}$ des ersten Übergangsbereichs der Fluidleitung 200 als auch eine Länge $L_{200b}$ des zweiten Übergangsbereichs der Fluidleitung 200 - gemessen als ein kürzester Abstand zwischen dem Strömungsquerschnitt $A_{200a}$ bzw. $A_{200b}$ und dem dazu jeweils am nähesten liegenden Strömungsquerschnitt $A_{200,Max}$ - eine der Bedingungen:

$$L_{200a} \geq 0{,}5 \cdot \left( \sqrt{A}_{200,Max} - \sqrt{A}_{200a} \right) \text{ bzw.} \tag{5}$$

$$L_{200b} \geq 0{,}5 \cdot \left( \sqrt{A}_{200,Max} - \sqrt{A}_{200a} \right) \tag{6}$$

und/oder eine der Bedingungen:

$$L_{200a} \leq 2 \cdot \left( \sqrt{A}_{200,Max} - \sqrt{A}_{200a} \right) \text{ bzw.} \tag{7}$$

$$L_{200b} \leq 0{,}5 \cdot \left( \sqrt{A}_{200,Max} - \sqrt{A}_{200a} \right) \tag{8}$$

erfüllt, bzw. daß sowohl eine Länge $L_{300a}$ des ersten Übergangsbereichs der Fluidleitung 300 als auch eine Länge $L_{300b}$ des zweiten Übergangsbereichs der Fluidleitung 300 - gemessen als ein kürzester Abstand zwischen dem Strömungsquerschnitt $A_{300a}$ bzw. $A_{300b}$ und dem dazu jeweils am nähesten liegenden Strömungsquerschnitt $A_{300,Max}$ - eine der Bedingungen:

$$L_{300a} \geq 0{,}5 \cdot \left( \sqrt{A}_{300,Max} - \sqrt{A}_{300a} \right) \text{ bzw.} \tag{9}$$

$$L_{300b} \geq 0{,}5 \cdot \left( \sqrt{A}_{300,Max} - \sqrt{A}_{300a} \right) \tag{10}$$

und/oder eine der Bedingungen:

$$L_{300a} \leq 2 \cdot \left( \sqrt{A}_{300,Max} - \sqrt{A}_{300a} \right) \text{ bzw.} \tag{11}$$

$$L_{300b} \leq 0{,}5 \cdot \left( \sqrt{A}_{300,Max} - \sqrt{A}_{300a} \right) \tag{12}$$

erfüllt. Die tatsächlich für das jeweilige Fluidleitungssystem jeweils optimalen Längen $L_{200a}$, $L_{200b}$, $L_{300a}$, $L_{300b}$ können dann beispielsweise als ein Kompromiss zwischen einem für die angestrebte niedrige Anfälligkeit des Fluidleitungssystems ausreichend guten Verlauf der akustischen Wellenimpedanzen und einer für die ggf. angestrebte hohe Meßgenauigkeit des Fluidleitungssystems ausreichend großen Gesamtlänge der Fluidleitungen 200 bzw. 300 - gefunden werden.

Zur weiteren Verbesserung des vorbezeichneten Verlaufs der akustischen Wellen- bzw. Flußimpedanzen des Fluidleitungssystems sind nach einer weiteren Ausgestaltung der Erfindung die Fluidleitungen 100, 200 und 300 ferner so ausgebildet, daß der auslaßseitige Strömungsquerschnitt $A_{100,Min}$ der Fluidleitung 100, der größte Strömungsquerschnitt $A_{200,Max}$ der Fluidleitung 200 sowie der größte Strömungsquerschnitt $A_{300,Max}$ der Fluidleitung 300 insgesamt eine Bedingung:

$$\frac{A_{200,Max} + A_{300,Max}}{A_{100,Min}} < 1{,}1 \tag{13}$$

erfüllen, und/oder sind die Fluidleitungen 200, 300 und 400 ferner so ausgebildet, daß nämlicher größter Strömungsquerschnitt $A_{200,Max}$, nämlicher größter Strömungsquerschnitt $A_{300,Max}$ sowie der einlaßseitige Strömungsquerschnitt $A_{400,Min}$ der Fluidleitung 400 insgesamt eine Bedingung:

$$\frac{A_{200,Max} + A_{300,Max}}{A_{400,Min}} < 1{,}1 \tag{14}$$

erfüllen; dies idealerweise so, daß für die vorbezeichneten Strömungsquerschnitte $A_{200,Max}$, $A_{300,Max}$, $A_{100,Min}$ bzw. $A_{400,Min}$ insgesamt zumindest näherungsweise gilt:

$$\frac{A_{200,Max} + A_{300,Max}}{A_{100,Min}} = 1 \quad \text{bzw.} \tag{15}$$

$$\frac{A_{200,Max} + A_{300,Max}}{A_{400,Min}} = 1 \tag{16}.$$

Alternativ oder in Ergänzung dazu ist die Fluidleitung 200 ferner so ausgebildet, daß deren einlaßseitiger Strömungsquerschnitt $A_{200a}$ und deren größter Strömungsquerschnitt $A_{200,Max}$ eine Bedingung:

$$0,7 < \frac{A_{200a}}{A_{200,Max}} < 1, \text{ insb. nämlich eine Bedingung } 0,8 < \frac{A_{200a}}{A_{200,Max}} < 0,95, \tag{17}$$

erfüllen, und/oder daß deren auslaßseitiger Strömungsquerschnitt ($A_{200b}$) und deren größter Strömungsquerschnitt ($A_{200,Max}$) eine Bedingung:

$$0,7 < \frac{A_{200b}}{A_{200,Max}} < 1, \text{ insb. nämlich eine Bedingung } 0,8 < \frac{A_{200b}}{A_{200,Max}} < 0,95, \tag{18}$$

erfüllen, bzw. ist die Fluidleitung 300 so ausgebildet, daß deren einlaßseitiger Strömungsquerschnitt $A_{300a}$ und deren größter Strömungsquerschnitt $A_{300,Max}$ eine Bedingung:

$$0,7 < \frac{A_{300a}}{A_{300,Max}} < 1, \text{ insb. nämlich eine Bedingung } 0,8 < \frac{A_{300a}}{A_{300,Max}} < 0,95, \tag{19}$$

erfüllen, und/oder daß deren auslaßseitiger Strömungsquerschnitt $A_{300b}$ und deren größter Strömungsquerschnitt $A_{300,Max}$ eine Bedingung:

$$0,7 < \frac{A_{300b}}{A_{300,Max}} < 1, \text{ insb. nämlich eine Bedingung } 0,8 < \frac{A_{300b}}{A_{300,Max}} < 0,95, \tag{20}$$

erfüllen.

Wie u.a. auch in Fig. 1, 3a bzw. 3b jeweils angedeutet, können der auslaßseitige Strömungsquerschnitt $A_{100,Min}$ der Fluidleitung 100 bzw. der einlaßseitige Strömungsquerschnitt $A_{400,Min}$ der Fluidleitung 400 - wie bei Fluidleitungssystemen der in Rede stehenden Art durchaus üblich - beispielsweise kreisförmig ausgebildet sein; falls erforderlich - etwa zwecks Bereitstellung eines weiteren, der Erfüllung der vorbezeichneten Bedingungen (1) und (2) bzw. (3) und (4) sowie ggf. auch der Bedingungen (5), (6), (7) bzw. (8) zuträglichen Freiheitgrades beim Design des Fluidleitungssystems - können die beiden Strömungsquerschnitte $A_{100,Min}$, $A_{400,Min}$ aber auch nicht-kreisförmig, beispielsweise nämlich auch ovalförmig ausgebildet sein. Nach einer weiteren Ausgestaltung der Erfindung sind die Fluidleitungen 100, 400 ferner so ausgestaltet, daß der auslaßseitige Strömungsquerschnitt $A_{100,Min}$ der Fluidleitung 100 und der einlaßseitige Strömungsquerschnitt $A_{400,Min}$ der Fluidleitung 400 zudem insgesamt eine Bedingung: $A_{100,Min} = A_{400,Min}$ erfüllen.

Um zu ermöglichen, daß das Fluidleitungssystem - wie bei solchen Fluidleitungssystemen durchaus üblich - in eine Rohrleitung mit einem Nennquerschnitt eingegliedert werden kann, der größer als der auslaßseitige Strömungsquerschnitt $A_{100,Min}$ der Fluidleitung 100, mithin größer als eine Summe $A_{200a}+A_{300a}$ der Strömungsquerschnitte $A_{200a}$, $A_{300a}$ ist, bzw. der größer als der einlaßseitige Strömungsquerschnitt $A_{400,Min}$ der Fluidleitung 400, mithin größer als eine Summe $A_{200b}+A_{300b}$ der Strömungsquerschnitte $A_{200b}$, $A_{300b}$ ist, ist nach einer weiteren Ausgestaltung der Erfindung ferner vorgesehen, daß die Fluidleitung 100 so ausgebildet ist, daß deren einlaßseitiger Strömungsquerschnitt $A_{100a}$ sowie deren auslaßseitiger Strömungsquerschnitt $A_{100,Min}$ insgesamt eine Bedingung:

$$1 < \frac{A_{100a}}{A_{100,Min}}, \text{ insb. nämlich eine Bedingung } 1,5 < \frac{A_{100a}}{A_{100,Min}}, \tag{21}$$

erfüllen, bzw. daß die Fluidleitung 400 so ausgebildet ist, daß deren einlaßseitiger Strömungsquerschnitt $A_{400,Min}$ sowie deren auslaßseitiger Strömungsquerschnitt $A_{400a}$ insgesamt eine Bedingung:

$$1 < \frac{A_{400a}}{A_{400,Min}} \text{ , insb. nämlich eine Bedingung } 1,5 < \frac{A_{400a}}{A_{400,Min}} \text{ ,} \qquad (22)$$

erfüllen. Um zu vermeiden, daß durch das Fluidleitungssystem im hindurchströmenden Fluid ein zu hoher Druckabfall provoziert wird, ist nach einer weiteren Ausgestaltung der Erfindung ferner vorgesehen, daß durch die vorbezeichneten Strömungsquerschnitte $A_{100a}$, $A_{100,Min}$ bzw. $A_{400a}$, $A_{400,Min}$ desweiteren eine der folgenden Bedingungen:

$$\frac{A_{100a}}{A_{100,Min}} < 3 \text{ bzw.} \qquad (23)$$

$$\frac{A_{400a}}{A_{400,Min}} < 3 \qquad (24)$$

erfüllt ist. Die Fluidleitungen 100, 400 sind zudem vorzugsweise so ausgebildet, daß der einlaßseitige Strömungsquerschnitt $A_{100a}$ einen größten Strömungsquerschnitt $A_{100,Max}$ der Fluidleitung 100 bzw. daß der auslaßseitige Strömungsquerschnitt $A_{400a}$ einen größten Strömungsquerschnitt $A_{400,Max}$ der Fluidleitung 400 bildet. Desweiteren können die Fluidleitungen 100, 400 in vorteilhafter Weise so ausgebildet sein, daß eine Länge $L_{100}$ der Fluidleitung 100 - gemessen als ein kürzester Abstand zwischen deren beiden Strömungsöffnungen 100a, 100b bzw. deren beiden Leitungsenden 100+, 100# - eine Bedingung:

$$L_{100a} \geq 0,5 \cdot \left( \sqrt{A}_{100a} - \sqrt{A}_{100,Min} \right) \qquad (25)$$

und/oder eine Bedingung:

$$L_{100a} \leq 2 \cdot \left( \sqrt{A}_{100a} - \sqrt{A}_{100,Min} \right) \qquad (26)$$

erfüllt, bzw. daß eine Länge $L_{400}$ der Fluidleitung 400 - gemessen als ein kürzester Abstand zwischen deren beiden Strömungsöffnungen 400a, 400b bzw. deren beiden Leitungsenden 400+, 400# - eine Bedingung:

$$L_{400a} \geq 0,5 \cdot \left( \sqrt{A}_{400a} - \sqrt{A}_{400,Min} \right) \qquad (27)$$

und/oder eine Bedingung:

$$L_{400a} \leq 2 \cdot \left( \sqrt{A}_{400a} - \sqrt{A}_{400,Min} \right) \qquad (28)$$

erfüllt. Die tatsächlich für das jeweilige Fluidleitungssystem jeweils optimalen Längen $L_{100}$, $L_{400}$ können dann beispielsweise wiederum als ein Kompromiss zwischen einem für die angestrebte niedrige Anfälligkeit des Fluidleitungssystems ausreichend guten Verlauf der akustischen Wellenimpedanzen und einer durch bauliche Gegebenheiten am jeweiligen Einsatzort nämlichen Fluidleitungssystems vorgegeben Einbaulänge - gemessen als ein maximaler Abstand zwischen den beiden Strömungsöffnungen 100a, 400a bzw. den beiden Leitungsenden 100+, 400+ - gefunden werden.

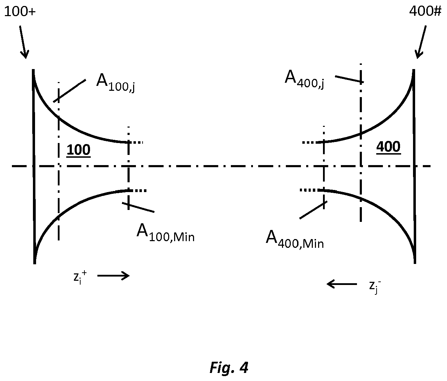

Zur Verbesserung des vorbezeichneten Verlaufs der akustischen Wellen- bzw. Flußimpedanzen des Fluidleitungssystems auch in dem durch die Fluidleitung 100 gebildeten Einlaßbereich des Fluidleitungssystems bzw. dem durch die Fluidleitung 400 gebildeten Auslaßbereich des Fluidleitungssystems sind nach einer weiteren Ausgestaltung der Erfindung die Fluidleitungen 100 und/oder die Fluidleitungen 400 ferner so ausgebildet, daß das Lumen der Fluidleitung 100 bzw. der Fluidleitung 400 - wie auch in Fig. 1, 2 oder 4 schematisch dargestellt bzw. aus deren Zusammenschau ohne weiteres ersichtlich - zumindest abschnittsweise, beispielsweise auch überwiegend, kreiskegel- bzw. konusförmig ausgebildet ist; dies beispielsweise nämlich auch derart, daß der auslaßseitige Strömungsquerschnitt $A_{100,Min}$ der Fluidleitung 100 in einem kreiskegel- bzw. konusförmigem Abschnitt des Lumens nämlicher Fluidleitung 100 verortet ist und aneinandergrenzende Strömungsquerschnitte $A_{100,}i$ der Fluidleitung 100 - ausgehend von deren auslaßseitigen Strömungsquerschnitt $A_{100,Min}$ - in eine Richtung $z_i^+$ hin zum Leitungsende 100+ nämlicher Fluidleitung 100 kontinuierlich zunehmen, beispielsweise gemäß einer Funktion:

$$A_{100,i} = A_{100,Min} \cdot e^{k \cdot z_i} \qquad (29)$$

zunehmen bzw. daß der kleinste Strömungsquerschnitt $A_{400,Min}$ der Fluidleitung 400 in einem kreiskegel- bzw. konusförmigem Abschnitt des Lumens nämlicher Fluidleitung 400 verortet ist und aneinandergrenzende Strömungsquerschnitte $A_{400,j}$ der Fluidleitung 400 - ausgehend von deren einlaßseitigen Strömungsquerschnitt $A_{400,Min}$ - in eine Richtung $z_j^+$ hin zu deren Leitungsende 400+ kontinuierlich und/oder gemäß einer Funktion:

$$A_{400,j} = A_{400,Min} \cdot e^{k \cdot z_j} \qquad (30)$$

zunehmen.

Das erfindungsgemäße Fluidleitungssystem kann, wie bereits mehrfach erwähnt bzw. nicht zuletzt auch in Fig. 2 dargestellt, u.a. auch Bestandteil eines dem Messen wenigstens einer Meßgröße - wie z.B. einer Dichte, einer Viskosität, eines Strömungsparameters, wie etwa einer Massendurchflußrate oder einer Volumendurchflußrate, und/oder einer Temperatur - eines strömenden Fluids dienlichen Meßsystems sein bzw. ein solches Meßsystem umfassen. Nämliches Meßsystem wiederum kann beispielsweise mittels eines - beispielsweise auch dem Generieren von von einer Massendurchflußrate des strömenden Fluids abhängigen Corioliskräften dienlichen - vibronischen Meßwandlers, etwa gemäß einer der eingangs erwähnten Patentanmeldungen EP-A 816 807, US-A 2001/0037690, US-A 2008/0184816, US-A 48 23 613, US-A 56 02 345, US-A 57 96 011, US-A 2011/0146416, US-A 2011/0265580, US-A 2012/0192658, WO-A 90/15310, WO-A 00/08423, WO-A 2006/107297, WO-A 2006/118557, WO-A 2008/059262, WO-A 2009/048457, WO-A 2009/078880, WO-A 2009/120223, WO-A 2009/123632, WO-A 2010/059157, WO-A 2013/006171 oder WO-A 2013/070191 oder auch gemäß der eigenen, nicht vorveröffentlichten deutschen Patentanmeldung DE102014118367.3, gebildet bzw. ein mittels eines solchen vibronischen Meßwandlers gebildetes konventionelles Coriolis-Massenduchfluß-Meßgerät sein. Bei einem solchen Fluidleitungssystem kann es sich zudem beispielsweise auch um eine Übergabestelle für eichpflichtigen Güterverkehr, wie z.B. eine Zapfanlage für Kraftstoffe bzw. eine Übergabestelle, handeln.

Nach einer weiteren Ausgestaltung der Erfindung ist daher vorgesehen, daß die Fluidleitungen 100, 200, 300, 400 Bestandteil eines dem Generieren wenigstens eines mit der vorbezeichneten wenigstens einen Meßgröße korrespondierenden Meßsignals dienenden Meßwandlers, beispielsweise nämlich eines vibronischen Meßwandlers, sind. Die Fluidleitung 100 kann demnach beispielsweise auch mittels eines Verteilerstücks eines solchen Meßwandlers, beispielsweise also mittels eines Verteilerstücks eines vibronischen Meßwandlers und/oder eines Meßwandlers eines Coriolis-Massendurchfluß-Meßgeräts, gebildet sein bzw. kann ein solches Verteilerstück mittels der Fluidleitung 100 gebildet sein. Nämliches Verteilerstück kann beispielsweise nominell als eine dem Aufteilen eines zugeführten Fluidstroms in zwei parallele Teilströme dienliche Leitungsverzweigung des vorbezeichneten Meßwandlers eingerichtet sein; das Verteilerstück kann aber auch eine nominell dem Zusammenführen zweier parallele Fluidströme zu einem Gesamtstrom dienliche Leitungsvereinigung des vorbezeichneten Meßwandlers sein. Dementsprechend kann auch die Fluidleitung 400 Bestandteil desselben Meßwandlers sein, beispielsweise nämlich mittels eines weiteren Verteilerstücks des Meßwandlers gebildet sein, das - komplementär zum anderen Verteilerstück - als eine dem Zusammenführen zweier parallele Fluidströme zu einem Gesamtstrom dienliche Leitungsvereinigung bzw. als eine dem Aufteilen eines zugeführten Fluidstroms in zwei parallele Teilströme dienliche Leitungsverzweigung eingerichtet ist.

Dementsprechend umfaßt das Fluidleitungssystem, wie auch Fig. 2 schematisch dargestellt, nach einer weiteren Ausgestaltung der Erfindung wenigstens einen ersten Sensor 51 zum Erzeugen wenigstens eines mit einer Meßgröße x eines im Fluidleitungssystem geführten Fluids korrespondierenden, nämlich wenigsten eines von nämlicher Meßgröße abhängigen Signalparameter aufweisenden - insb. elektrischen bzw. analogen - ersten Meßsignals s1. Bei der wenigstens einen Meßgröße x kann es sich, wie bereits erwähnt, beispielsweise um eine Dichte, eine Viskosität oder eine Temperatur des ggf. auch strömen gelassenen Fluids handeln. Nämliche Meßgröße x kann aber beispielsweise auch ein Strömungsparameter, wie etwa eine Massendurchflußrate oder einer Volumendurchflußrate, sein. Als ein von der Meßgröße abhängiger Signalparameter wiederum kann beispielsweise ein von der wenigstens einen Meßgröße abhängiger Signalpegel, eine von nämlicher Meßgröße abhängige Signalfrequenz und/oder ein von nämlicher Meßgröße abhängiger Phasenwinkel des Meßsignals dienen. Der Sensor 51 kann, wie in Fig. 2 angedeutet, außerhalb der Fluidleitungen 200, 300 gleichwohl in der Nähe der Fluidleitung 200 und/oder in der Nähe der Fluidleitung 300 plaziert sein, beispielsweise auch derart, daß der Sensor 51 zumindest an der Fluidleitung 200 bzw. sowohl an der Fluidleitung 200 als auch an der Fluidleitung 300 angebracht ist.

Für den bereits erwähnten Fall, daß die Fluidleitung 200 Bestandteil eines vibronischen Meßwandlers sind, ist nach einer weiteren Ausgestaltung der Erfindung zumindest die Fluidleitung 200 dafür eingerichtet, von Fluid durchströmt und währenddessen vibrieren gelassen zu werden. Darüberhinaus kann auch die Fluidleitung 300 dafür eingerichtet sein, beispielsweise nämlich für den Fall, daß sowohl die Fluidleitung 200 als auch die Fluidleitung 300 Bestandteil des vorbezeichneten vibronischen Meßwandlers sind, von Fluid durchströmt und währenddessen vibrieren gelassen zu werden; dies beispielsweise auch in der Weise, daß die beiden Fluidleitungen 200, 300 simultan von Fluid durchströmt und/oder währenddessen simultan, insb. nämlich gegengleich, vibrieren gelassen werden Dementsprechend kann das Fluidleitungssystem nach einer weiteren Ausgestaltung der Erfindung ferner wenigstens einen, insb. elektromechanischen bzw. elektrodynamischen, Schwingungserreger 41 zum Anregen bzw. Aufrechterhalten mechanischer Schwingungen, beispielsweise nämlich Biegeschwingungen, zumindest der Fluidleitung 200 bzw. zum Anregen und/oder Aufrechterhalten mechanischer Schwingungen sowohl der Fluidleitung 200 als auch der Fluidleitung 300 umfassen. Desweiteren kann es sich im vorbezeichneten Fall bei dem Sensor 51 um einen, beispielsweise elektrodynamischen und/oder Schwingungsbewegungen der beiden Fluidleitungen 200, 300 differenziell erfassenden, Schwingungssensor handeln. Nicht zuletzt für den erwähnten Fall, daß das Fluidleitungssystem dafür vorgesehen ist, basierend auf im strömenden Fluid generierten Corioliskräften eine Massendurchflußrate zu messen, kann das Fluidleitungssystem zusätzlich zum Sensor 51 zudem auch wenigstens einen zweiten Sensor 52 zum Erzeugen wenigstens eines mit der Meßgröße korrespondierenden - insb. elektrischen und/oder analogen - zweiten Meßsignals s2 aufweisen. Nämlicher Sensor 52 kann baugleich wie der Sensor 51 und/oder und in gleichem Abstand wie der Sensor 51 von der Fluidleitung 200 bzw. den Fluidleitungen 200, 300 entfernt positioniert sein. Alternativ oder in Ergänzung können die Sensoren 51, 52 symmetrisch bezüglich des Schwingungserregers 41 positioniert sein, beispielsweise auch derart, daß, wie in Fig. 2 angedeutet und wie bei vibronischen Meßwandlern der vorbezeichneten Art durchaus üblich, der Sensor 52 von der Fluidleitung 100 weiter entfernt ist als der Sensor 51 bzw. umgekehrt der Sensor 51 von der Fluidleitung 400 weiter entfernt ist als der Sensor 52 und/oder derart, daß der Sensor 51 gleichweit von der Fluidleitung 100 entfernt ist wie der Sensor 52 von der Fluidleitung 400.

Zwecks Verarbeitung bzw. Auswertung des wenigstens einen Meßsignals s1 kann das Fluidleitungssystem ferner eine mit dem Sensor 51 bzw. mit den Sensoren 51, 52 elektrisch gekoppelte, beispielsweise mittels wenigstens eines Mikroprozessors und/oder eines digitalen Signalprozessors (DSP) gebildete, Meß- und Betriebselektronik 500 umfassen, die - wie auch in Fig. 2 schematisch dargestellt - in vorteilhafter Weise wiederum in einem in ausreichendem Maße staub- und wasserdichten bzw. schlag- und explosionsfesten Schutzgehäuse 5000 untergebracht sein kann. Im besonderen kann die Meß- und Betriebselektronik 500 ferner dafür eingerichtet sein, das wenigstens eines Meßsignal s1 bzw. die Meßsignale s1, s2 zu verarbeiten, insb. nämlich mittels des Meßsignals s1 Meßwerte $X_x$ für die wenigstens eine Meßgröße x zu ermitteln. Für den vorbezeichneten Fall, daß das Fluidleitungssystem mit wenigstens einem Schwingungserreger 41 ausgerüstet ist, kann die Meß- und Betriebselektronik 500 zudem mit nämlichem Schwingungserreger 41 elektrisch gekoppelt sein. Nach einer weiteren Ausgestaltung der Erfindung ist die Meß- und Betriebselektronik 500 ferner dafür eingerichtet, ein elektrische Anregungssignal e1 in den vorbezeichneten Schwingungserreger 41 einzuspeisen, und ist der Schwingungserreger 41 zudem dafür eingerichtet, mittels des Anregungssignals e1 eingespeiste elektrische Leistung in mechanische Schwingungen zumindest der Fluidleitung 200 bzw. in mechanische Schwingungen sowohl der Fluidleitung 200 als auch der Fluidleitung 300 bewirkende mechanische Leistung zu wandeln.

Nicht zuletzt für den erwähnten Fall, daß das Fluidleitungssystem als Bestandteil eines Meßsystems ausgebildet ist, kann das Fluidleitungssystem, wie auch in Fig. 2 schematisch dargestellt, ferner ein Schutzgehäuse 1000 für die Fluidleitungen 200, 300 umfassen. Das Schutzgehäuse 1000 weist eine von einer Wandung umhüllte Kavität auf, innerhalb der die Fluidleitung 200 und zumindest die Fluidleitung 300 plaziert sind. Nicht zuletzt zwecks Bildung eines in ausreichendem Maße verwindungs- und biegesteifen bzw. schlag- und druckfesten Schutzgehäuses kann dessen Wandung beispielsweise aus einem Metall, etwa einem Edelstahl, hergestellt und/oder zumindest teilweise hohlzylindrisch ausgebildet sein. Wie in ferner Fig. 2 angedeutet, kann zudem ein erstes Gehäuseende 1000+ des Schutzgehäuses 1000 mittels der Fluidleitung 100 gebildet sein, etwa derart, daß die Fluidleitung 100 integraler Bestandteil des Schutzgehäuses ist und/oder daß das Schutzgehäuse 1000 eine die vorbezeichnete Kavität seitlich begrenzende Seitenwand aufweist, die seitlich an der Fluidleitung 100 fixiert bzw. stoffschlüssig mit dieser verbunden ist. Darüberhinaus kann zudem auch ein zweites Gehäuseende 1000# nämlichen Schutzgehäuses 1000 mittels der Fluidleitung 400 gebildet sein, beispielsweise auch so, daß sowohl die Fluidleitung 100 als auch die Fluidleitung 400 jeweils integraler Bestandteil des Schutzgehäuses ist bzw. daß das Schutzgehäuse 1000 eine die Kavität seitlich begrenzende Seitenwand aufweist, die seitlich sowohl an der Fluidleitung 100 als auch an der Fluidleitung 400 fixiert bzw. stoffschlüssig mit der der ersten Fluidleitung verbunden ist.

## Patentansprüche

1. Fluidleitungssystem, umfassend:

- eine, insb. als Anschlußstutzen und/oder als Leitungsverzweigung ausgebildete, erste Fluidleitung (100) mit einem von einer Wandung, insb. aus einem Metall, umhüllten, sich von einer in einem, insb. von einem Anschlußflansch gefaßten, ersten Leitungsende (100+) der ersten Fluidleitung (100) verorteten, insb. kreisförmigen, ersten Strömungsöffnung (100a) sowohl bis zu einer in einem zweiten Leitungsende (100#) nämlicher ersten Fluidleitung (100) verorteten, insb. kreisförmigen, halbkreisförmigen oder ovalförmigen, zweiten Strömungsöffnung (100b) als auch bis zu einer von nämlicher zweiten Strömungsöffnung (100b) beabstandet im zweiten Leitungsende (100#) nämlicher ersten Fluidleitung (100) verorteten, insb. kreisförmigen, halbkreisförmigen oder ovalförmigen, dritten Strömungsöffnung (100c) erstreckenden Lumen (100*);

- eine, insb. als starres und/oder zumindest abschnittsweise kreiszylindrisches Rohr ausgebildete, zweite Fluidleitung (200) mit einem von einer Wandung, insb. aus einem Metall, umhüllten, sich von einer in einem ersten Leitungsende (200+) der zweiten Fluidleitung verorteten, insb. kreisförmigen, halbkreisförmigen oder ovalförmigen, ersten Strömungsöffnung (200a) bis zu einer in einem zweiten Leitungsende (200#) nämlicher zweiten Fluidleitung (200) verorteten, insb. kreisförmigen, halbkreisförmigen oder ovalförmigen, zweiten Strömungsöffnung (200b) erstreckenden Lumen (200*), derart, daß ein größter Strömungsquerschnitt ($A_{200,Max}$) der zweiten Fluidleitung (200) sowohl von deren ersten Leitungsende (200+) als auch von deren zweiten Leitungsende (200#) beabstandet ist;

- wenigstens eine, insb. als starres und/oder zumindest abschnittsweise kreiszylindrisches Rohr ausgebildete und/oder zur zweiten Fluidleitung baugleiche, dritte Fluidleitung (300) mit einem von einer Wandung, insb. aus einem Metall, umhüllten, sich von einer in einem ersten Leitungsende (300+) der dritten Fluidleitung verorteten, insb. kreisförmigen, halbkreisförmigen oder ovalförmigen, ersten Strömungsöffnung (300a) bis zu einer in einem zweiten Leitungsende (300#) nämlicher dritten Fluidleitung (300) verorteten, insb. kreisförmigen, halbkreisförmigen oder ovalförmigen, zweiten Strömungsöffnung (300b) erstreckenden Lumen (300*), derart, daß ein größter Strömungsquerschnitt ($A_{300,Max}$) der dritten Fluidleitung (300) sowohl von deren ersten Leitungsende (300+) als auch von deren zweiten Leitungsende (300#) beabstandet ist;

- sowie eine, insb. zur ersten Fluidleitung baugleiche und/oder als Anschlußstutzen ausgebildete und/oder als Leitungsvereinigung dienliche, vierte Fluidleitung (400) mit einem von einer Wandung, insb. aus einem Metall, umhüllten, sich von einer in einem, insb. von einem Anschlußflansch gefaßten, ersten Leitungsende (400+) der vierten Fluidleitung (400) verorteten, insb. kreisförmigen, ersten Strömungsöffnung (400a) sowohl bis zu einer in einem zweiten Leitungsende (400#) nämlicher vierten Fluidleitung (400) verorteten, insb. kreisförmigen, halbkreisförmigen oder ovalförmigen, zweiten Strömungsöffnung (400b) als auch bis zu einer von nämlicher zweiten Strömungsöffnung beabstandet im zweiten Leitungsende (400#) nämlicher vierten Fluidleitung (400) verorteten, insb. kreisförmigen, halbkreisförmigen oder ovalförmigen, dritten Strömungsöffnung (400c) erstreckenden Lumen (400*);

- wobei sowohl die zweite Fluidleitung (200) mit deren ersten Leitungsende (200+) als auch die dritte Fluidleitung (300) mit deren ersten Leitungsende (300+) jeweils mit dem zweiten Leitungsende (100#) der ersten Fluidleitung (100) verbunden sind, insb. derart, daß sowohl das Lumen der zweiten Fluidleitung (200) als auch das Lumen der dritten Fluidleitung (300) mit dem Lumen der ersten Fluidleitung (100) kommunizieren und/oder derart, daß die erste Strömungsöffnung (200a) der zweiten Fluidleitung (200) in die zweite Strömungsöffnung (100b) der ersten Fluidleitung (100) und die erste Strömungsöffnung (300a) der dritten Fluidleitung (300) in die dritte Strömungsöffnung (100c) der ersten Fluidleitung (100) münden;

- wobei sowohl die zweite Fluidleitung (200) mit deren zweiten Leitungsende (200#) als auch die dritte Fluidleitung (300) mit deren zweiten Leitungsende (300#) jeweils mit dem zweiten Leitungsende (400#) der vierten Fluidleitung (400) verbunden sind, insb. derart, daß sowohl das Lumen (200*) der zweiten Fluidleitung (200) als auch das Lumen (300*) der dritten Fluidleitung (300) mit dem Lumen der vierten Fluidleitung (400) kommuniziert und/oder derart, daß die zweite Strömungsöffnung (200b) der zweiten Fluidleitung (200) in die zweite Strömungsöffnung (400b) der vierten Fluidleitung (400) und die zweite Strömungsöffnung (300b) der dritten Fluidleitung in die dritte Strömungsöffnung (400c) der vierten Fluidleitung (400) münden;

- wobei die erste Strömungsöffnung (200a) der zweiten Fluidleitung (200) einen, insb. kreisförmigen, halbkreisförmigen oder ovalförmigen, einlaßseitigen Strömungsquerschnitt ($A_{200a}$) nämlicher zweiten Fluidleitung (200) und die zweite Strömungsöffnung (200b) der zweiten Fluidleitung (200) einen, insb. kreisförmigen, halbkreisförmigen oder ovalförmigen, auslaßseitigen Strömungsquerschnitt ($A_{200b}$) nämlicher zweiten Fluidleitung (200) bilden; und

- wobei die erste Strömungsöffnung (300a) der dritten Fluidleitung (300) einen, insb. kreisförmigen, halbkreisförmigen oder ovalförmigen, einlaßseitigen Strömungsquerschnitt ($A_{300a}$) nämlicher dritten Fluidleitung (300) und die zweite Strömungsöffnung (300b) der dritten Fluidleitung (300) einen, insb. kreisförmigen, halbkreisförmigen oder ovalförmigen, auslaßseitigen Strömungsquerschnitt ($A_{300b}$) nämlicher dritten Fluidleitung (300) bilden;

- wobei die erste Fluidleitung (100), die zweite Fluidleitung (200) und die dritte Fluidleitung (300) so ausgebildet sind,

-- daß ein am zweiten Leitungsende (100#) der ersten Fluidleitung (100) verorteter, gleichwohl an die zweite Strömungsöffnung (100b) sowie die dritte Strömungsöffnung (100c) nämlicher ersten Fluidleitung (100) angrenzender auslaßseitiger Strömungsquerschnitt $A_{100,Min}$ der ersten Fluidleitung (100), der einlaßseitige Strömungsquerschnitt $A_{200a}$ der zweiten Fluidleitung (200) sowie der einlaßseitige Strömungsquerschnitt $A_{300a}$ der dritten Fluidleitung (300) insgesamt eine Bedingung:

$$0,8 < \frac{A_{200a} + A_{300a}}{A_{100,Min}}$$

erfüllen

-- und daß nämlicher auslaßseitige Strömungsquerschnitt $A_{100,Min}$ der ersten Fluidleitung (100), der größte Strömungsquerschnitt $A_{200,Max}$ der zweiten Fluidleitung (200) sowie der größte Strömungsquerschnitt $A_{300,Max}$ der dritten Fluidleitung (300) insgesamt eine Bedingung:

$$0,9 < \frac{A_{200,Max} + A_{300,Max}}{A_{100,Min}},$$

insb. nämlich zumindest näherungsweise eine Bedingung:

$$\frac{A_{200,Max} + A_{300,Max}}{A_{100,Min}} = 1,$$

erfüllen; und/oder

- wobei die erste Fluidleitung (100), die zweite Fluidleitung (200) und die vierte Fluidleitung (400) so ausgebildet sind,

-- daß der auslaßseitige Strömungsquerschnitt $A_{200b}$ der zweiten Fluidleitung (200), der auslaßseitige Strömungsquerschnitt $A_{300b}$ der dritten Fluidleitung (300) sowie ein an am zweiten Leitungsende (400#) der vierten Fluidleitung (400) verorteter, gleichwohl an die zweite Strömungsöffnung (400b) sowie die dritte Strömungsöffnung (400c) nämlicher vierten Fluidleitung (400) angrenzender einlaßseitiger Strömungsquerschnitt $A_{400,Min}$ der vierten Fluidleitung (400) insgesamt eine Bedingung:

$$0,8 < \frac{A_{200b} + A_{300b}}{A_{400,Min}}$$

erfüllen

-- und daß der größte Strömungsquerschnitt $A_{200,Max}$ der zweiten Fluidleitung (200), der größte Strömungsquerschnitt $A_{300,Max}$ der dritten Fluidleitung (300) sowie nämlicher einlaßseitige Strömungsquerschnitt $A_{400,Min}$ der vierten Fluidleitung (400) insgesamt eine Bedingung

$$0,9 < \frac{A_{200,Max} + A_{300,Max}}{A_{400,Min}},$$

insb. nämlich zumindest näherungsweise eine Bedingung:

$$\frac{A_{200,Max} + A_{300,Max}}{A_{400,Min}} = 1,$$

erfüllen.

2. Fluidleitungssystem nach Anspruch 1,

- wobei die erste Fluidleitung (100), die zweite Fluidleitung (200) und die dritte Fluidleitung (300) so ausgebildet sind, daß der auslaßseitige Strömungsquerschnitt $A_{100,Min}$ der ersten Fluidleitung (100), der größte Strömungsquerschnitt $A_{200,Max}$ der zweiten Fluidleitung (200) sowie der größte Strömungsquerschnitt $A_{300,Max}$ der dritten Fluidleitung (300) insgesamt eine Bedingung:

$$\frac{A_{200,Max} + A_{300,Max}}{A_{100,Min}} < 1,1 \text{ erfüllen};$$

und/oder
- wobei die zweite Fluidleitung (200), die dritte Fluidleitung (300) und die vierte Fluidleitung (400) so ausgebildet sind, daß der größte Strömungsquerschnitt $A_{200,Max}$ der zweiten Fluidleitung (200), der größte Strömungsquerschnitt $A_{300,Max}$ der dritten Fluidleitung (300) sowie der einlaßseitige Strömungsquerschnitt $A_{400,Min}$ der vierten Fluidleitung (400) insgesamt eine Bedingung:

$$\frac{A_{200,Max} + A_{300,Max}}{A_{400,Min}} < 1,1 \text{ erfüllen.}$$

3. Fluidleitungssystem nach einem der vorherigen Ansprüche,

- wobei das Lumen der zweiten Fluidleitung (200) abschnittsweise, insb. nämlich in einem sich von deren einlaßseitigen Strömungsquerschnitt ($A_{200a}$) in Richtung zu deren größtem Strömungsquerschnitt ($A_{200,Max}$) erstreckenden ersten Übergangsbereich und/oder in einem sich von deren auslaßseitigen Strömungsquerschnitt ($A_{200b}$) in Richtung zu deren größtem Strömungsquerschnitt ($A_{200,Max}$) erstreckenden zweiten Übergangsbereich, kegel- bzw. konusförmig ausgebildet ist, derart, daß aneinandergrenzende Strömungsquerschnitte ($A_{200,j}$) der zweiten Fluidleitung (200), ausgehend von deren einlaßseitigen Strömungsquerschnitt ($A_{200a}$) in eine Richtung ($z_j^+$) hin zu deren größtem Strömungsquerschnitt ($A_{200,Max}$) kontinuierlich, insb. nämlich linear oder überproportional, zunehmen und/oder derart, daß aneinandergrenzende Strömungsquerschnitte ($A_{200,j}$) der zweiten Fluidleitung (200), ausgehend von deren auslaßseitigen Strömungsquerschnitt ($A_{200b}$) in eine Richtung ($z_j^-$) hin zu deren größtem Strömungsquerschnitt ($A_{200,Max}$) kontinuierlich, insb. nämlich linear oder überproportional, zunehmen; und/oder
- wobei das Lumen der dritten Fluidleitung (300) abschnittsweise, insb. nämlich in einem sich von deren einlaßseitigen Strömungsquerschnitt ($A_{300a}$) in Richtung zu deren größtem Strömungsquerschnitt ($A_{300,Max}$) erstreckenden ersten Übergangsbereich und/oder in einem sich von deren auslaßseitigen Strömungsquerschnitt ($A_{300b}$) in Richtung zu deren größtem Strömungsquerschnitt ($A_{300,Max}$) erstreckenden zweiten Übergangsbereich, kegel- bzw. konusförmig ausgebildet ist, derart, daß aneinandergrenzende Strömungsquerschnitte ($A_{300,i}$) der dritten Fluidleitung (300), ausgehend von deren einlaßseitigen Strömungsquerschnitt ($A_{300a}$) in eine Richtung ($z_i^+$) hin zu deren größtem Strömungsquerschnitt ($A_{300,Max}$) kontinuierlich, insb. nämlich linear oder überproportional, zunehmen und/oder derart, daß aneinandergrenzende Strömungsquerschnitte ($A_{300,i}$) der dritten Fluidleitung (300), ausgehend von deren auslaßseitigen Strömungsquerschnitt ($A_{300b}$) in eine Richtung ($z_j^-$) hin zu deren größtem Strömungsquerschnitt ($A_{300,Max}$) kontinuierlich, insb. nämlich linear oder überproportional, zunehmen.

4. Fluidleitungssystem nach einem der vorherigen Ansprüche,

- wobei die zweite Fluidleitung (200) und die dritte Fluidleitung (300) so ausgebildet sind, daß der größte Strömungsquerschnitt $A_{200,Max}$ der zweiten Fluidleitung (200) und der größte Strömungsquerschnitt $A_{300,Max}$ der dritten Fluidleitung (300) insgesamt eine Bedingung:
$A_{200,Max} = A_{300,Max}$ erfüllen; und/oder
- wobei die erste Fluidleitung (100) sowie die vierte Fluidleitung (400) so ausgebildet sind, daß der auslaßseitige Strömungsquerschnitt $A_{100,Min}$ der ersten Fluidleitung (100) und der einlaßseitige Strömungsquerschnitt $A_{400,Min}$ der vierten Fluidleitung (400) insgesamt eine Bedingung:
$A_{100,min} = A_{400,Min}$ erfüllen.

5. Fluidleitungssystem nach einem der vorherigen Ansprüche,

- wobei das Lumen der zweiten Fluidleitung (200) zumindest abschnittsweise, insb. überwiegend, kreiszylindrisch ausgebildet ist und der größte Strömungsquerschnitt ($A_{200,Max}$) der zweiten Fluidleitung (200) in einem kreiszylindrischem Abschnitt nämlichen Lumens verortet ist; und/oder
- wobei das Lumen der dritten Fluidleitung (300) zumindest abschnittsweise, insb. überwiegend, kreiszylindrisch ausgebildet ist, und der größte Strömungsquerschnitt ($A_{300,Max}$) der dritten Fluidleitung (300) in einem kreiszylindrischem Abschnitt nämlichen Lumens verortet ist.

6. Fluidleitungssystem nach einem der vorherigen Ansprüche, wobei die zweite Fluidleitung (200) und die dritte Fluidleitung (300) so ausgebildet sind,

- daß der einlaßseitige Strömungsquerschnitt $A_{200a}$ der zweiten Fluidleitung (200) sowie der einlaßseitige Strömungsquerschnitt $A_{300a}$ der dritten Fluidleitung (300) eine Bedingung: $A_{200a} = A_{300a}$ erfüllen; und/oder
- daß der auslaßseitige Strömungsquerschnitt $A_{200b}$ der zweiten Fluidleitung (200) sowie der auslaßseitige Strömungsquerschnitt $A_{300b}$ der dritten Fluidleitung (300) eine Bedingung: $A_{200b} = A_{300b}$ erfüllen; und/oder
- daß der einlaßseitige Strömungsquerschnitt $A_{200a}$ sowie der auslaßseitige Strömungsquerschnitt $A_{200b}$ der zweiten Fluidleitung (200) eine Bedingung: $A_{200a} = A_{200b}$ erfüllen; und/oder
- daß der einlaßseitige Strömungsquerschnitt $A_{300a}$ sowie der auslaßseitige Strömungsquerschnitt $A_{300b}$ der dritten Fluidleitung (300) eine Bedingung: $A_{300a} = A_{300b}$ erfüllen; und/oder
- daß der einlaßseitige Strömungsquerschnitt $A_{200a}$ und/oder der auslaßseitige Strömungsquerschnitt $A_{200b}$ der zweiten Fluidleitung (200) einen kleinsten Strömungsquerschnitt $A_{200,Min}$ nämlicher zweiten Fluidleitung (200) bilden; und/oder
- daß der einlaßseitige Strömungsquerschnitt $A_{300a}$ und/oder der auslaßseitige Strömungsquerschnitt $A_{300b}$ der dritten Fluidleitung (300) einen kleinsten Strömungsquerschnitt $A_{300,Min}$ nämlicher dritten Fluidleitung (300) bilden.

7. Fluidleitungssystem nach einem der vorherigen Ansprüche,

- wobei der auslaßseitige Strömungsquerschnitt ($A_{100,Min}$) der ersten Fluidleitung (100) ovalförmig ausgebildet ist; und/oder
- wobei der einlaßseitige Strömungsquerschnitt ($A_{200a}$) der zweiten Fluidleitung (200) ovalförmig oder halbkreisförmig ausgebildet ist; und/oder
- wobei der einlaßseitige Strömungsquerschnitt ($A_{300a}$) der dritten Fluidleitung (300) ovalförmig oder halbkreisförmig ausgebildet ist; und/oder
- wobei der auslaßseitige Strömungsquerschnitt ($A_{200b}$) der zweiten Fluidleitung (200) ovalförmig oder halbkreisförmig ausgebildet ist; und/oder
- wobei der auslaßseitige Strömungsquerschnitt ($A_{300b}$) der dritten Fluidleitung (300) ovalförmig oder halbkreisförmig ausgebildet ist; und/oder
- wobei der einlaßseitige Strömungsquerschnitt ($A_{400,Min}$) der vierten Fluidleitung (400) ovalförmig ausgebildet ist; und/oder
- wobei die zweite Fluidleitung (200) so ausgebildet ist, daß deren einlaßseitiger Strömungsquerschnitt $A_{200a}$

$$0{,}7 < \frac{A_{200a}}{A_{200,Max}} < 1$$

und deren größter Strömungsquerschnitt $A_{200,Max}$ eine Bedingung: , insb. nämlich eine

Bedingung $$0{,}8 < \frac{A_{200a}}{A_{200,Max}} < 0{,}95$$ , erfüllen; und/oder

- wobei die dritte Fluidleitung (300) so ausgebildet ist, daß deren einlaßseitiger Strömungsquerschnitt $A_{300a}$

$$0{,}7 < \frac{A_{300a}}{A_{300,Max}} < 1$$

und deren größter Strömungsquerschnitt $A_{300,Max}$ eine Bedingung: , insb. nämlich eine

Bedingung $$0{,}8 < \frac{A_{300a}}{A_{300,Max}} < 0{,}95$$ , erfüllen; und/oder

- wobei die zweite Fluidleitung (200) so ausgebildet ist, daß deren auslaßseitiger Strömungsquerschnitt $A_{200b}$

$$0,7 < \frac{A_{200b}}{A_{200,Max}} < 1$$

und deren größter Strömungsquerschnitt $A_{200,Max}$ eine Bedingung: , insb. nämlich eine

$$0,8 < \frac{A_{200b}}{A_{200,Max}} < 0,95$$

Bedingung , erfüllen; und/oder

- wobei die dritte Fluidleitung (300) so ausgebildet ist, daß deren auslaßseitiger Strömungsquerschnitt $A_{300b}$

$$0,7 < \frac{A_{300b}}{A_{300,Max}} < 1$$

und deren größter Strömungsquerschnitt $A_{300,Max}$ ($A_{300,Max}$) eine Bedingung: , insb.

$$0,8 < \frac{A_{300b}}{A_{300,Max}} < 0,95$$

nämlich eine Bedingung , erfüllen.

**8.** Fluidleitungssystem nach einem der vorherigen Ansprüche,

- wobei das Lumen der ersten Fluidleitung (100) zumindest abschnittsweise, insb. überwiegend, kreiskegel- bzw. konusförmig ausgebildet ist, insb. derart, daß aneinandergrenzende Strömungsquerschnitte ($A_{100,i}$) der ersten Fluidleitung (100), ausgehend von deren auslaßseitigen Strömungsquerschnitt ($A_{100,Min}$), in eine Richtung ($z_i^+$) hin zum ersten Leitungsende (100+) kontinuierlich zunehmen und der auslaßseitige Strömungsquerschnitt ($A_{100,Min}$) der ersten Fluidleitung (100) in einem kreiskegel- bzw. konusförmigem Abschnitt des Lumens nämlicher ersten Fluidleitung (100) verortet ist; und/oder
- wobei das Lumen der vierten Fluidleitung (400) zumindest abschnittsweise, insb. überwiegend, kreiskegel- bzw. konusförmig ausgebildet ist, insb. derart, daß aneinandergrenzende StrömungsQuerschnitte ($A_{400,j}$) der vierten Fluidleitung (400), ausgehend von deren einlaßseitigen StrömungsQuerschnitt ($A_{400,Min}$), in eine Richtung ($z_j^-$) hin zu deren zweiten Leitungsende (400#) kontinuierlich zunehmen und der kleinste Strömungsquerschnitt ($A_{400,Min}$) der vierten Fluidleitung (400) in einem kreiskegel- bzw. konusförmigem Abschnitt des Lumens nämlicher vierten Fluidleitung (400) verortet ist.

**9.** Fluidleitungssystem nach einem der vorherigen Ansprüche,

- wobei die erste Strömungsöffnung (100a) der ersten Fluidleitung (100) einen einlaßseitigen Strömungsquerschnitt ($A_{100a}$) nämlicher Fluidleitung ersten (100) bildet; und
- wobei die erste Strömungsöffnung (400a) der vierten Fluidleitung (400) einen auslaßseitigen Strömungsquerschnitt ($A_{400a}$) nämlicher vierten Fluidleitung (400) bildet, und
- wobei die erste Fluidleitung (100) und die vierte Fluidleitung (400) so ausgebildet sind,
- - daß der einlaßseitige Strömungsquerschnitt ($A_{100a}$) der ersten Fluidleitung (100) einen größten Strömungsquerschnitt ($A_{100,Max}$) nämlicher ersten Fluidleitung (100) bildet; und/oder
- - daß der auslaßseitige Strömungsquerschnitt ($A_{400a}$) der vierten Fluidleitung (400) einen größten Strömungsquerschnitt ($A_{400,Max}$) nämlicher vierten Fluidleitung (400) bildet.

**10.** Fluidleitungssystem nach einem der vorherigen Ansprüche,

- wobei der größte Strömungsquerschnitt ($A_{200,Max}$) der zweiten Fluidleitung (200) kreisförmig ausgebildet ist; und/oder
- wobei der größte Strömungsquerschnitt ($A_{300,Max}$) der dritten Fluidleitung (300) kreisförmig ausgebildet ist; und/oder.
- wobei der einlaßseitige Strömungsquerschnitt der ersten Fluidleitung (100) kreisförmig ausgebildet ist; und/oder
- wobei der auslaßseitige Strömungsquerschnitt der vierten Fluidleitung (400) kreisförmig ausgebildet ist.

**11.** Fluidleitungssystem nach einem der vorherigen Ansprüche,

- wobei zumindest die zweite Fluidleitung und die dritte Fluidleitung jeweils Bestandteil eines dem Generieren wenigstens eines mit der wenigstens einen Meßgröße korrespondierenden Meßsignals (s1, s2) dienenden Meßwandlers, insb. eines vibronischen Meßwandlers, sind; und/oder
- wobei die erste Fluidleitung (100) mittels eines, insb. als Leitungsverzweigung oder Leitungsvereinigung ausgebildeten, Verteilerstücks eines Meßwandlers, insb. eines vibronischen Meßwandlers und/oder eines Meßwandlers eines Coriolis-Massendurchfluß-Meßqeräts, gebildet ist; und/oder
- wobei die vierte Fluidleitung (400) mittels eines, insb. als Leitungsverzweigung oder Leitungsvereinigung ausgebildeten, Verteilerstücks eines Meßwandlers, insb. eines vibronischen Meßwandlers und/oder eines Meßwandlers eines Coriolis-Massendurchfluß-Meßqeräts, gebildet ist.

12. Fluidleitungssystem nach einem der vorherigen Ansprüche, wobei zumindest die zweite Fluidleitung (200) dafür eingerichtet ist, von Fluid durchströmt und währenddessen vibrieren gelassen zu werden.

13. Fluidleitungssystem nach dem vorherigen Anspruch, wobei die dritte Fluidleitung (300) dafür eingerichtet ist, insb. simultan zur zweiten Fluidleitung (200), von Fluid durchströmt und währenddessen, insb. simultan zur zweiten Fluidleitung (200), vibrieren gelassen zu werden.

14. Verwenden eines Fluidleitungssystems gemäß einem der vorherigen Ansprüche zum Ermitteln von Meßwerten für wenigstens eine Meßgröße - insb. nämlich einer Massendurchflußrate, eines Massendurchflusses, einer Volumendurchflußrate, eines Volumendurchflusses, einer Dichte, einer Viskosität oder einer Temperatur - eines zu transferierenden Fluids, insb. eines verflüssigtes Gases, beispielsweise nämlich eines Methan und/oder Ethan und/oder Propan und/oder Buthan enthaltenden Flüssiggases und/oder eines verflüssigten Erdgases (LNG), oder eines komprimierten Gases, beispielsweise nämliche eines komprimierten Erdgases (CNG).

## Claims

1. Fluid pipe system, comprising:

- a first fluid pipe (100), particularly designed as a connection nozzle and/or a pipe branch, with an interior channel (100*) surrounded by a wall, particularly a metal wall, which extends from a first flow opening (100a), particularly circular, located in a first pipe end (100+) of the first fluid pipe (100), wherein said end is particularly held by a connection flange, up to a second flow opening (100b), particularly circular, semi-circular or oval, located in a second pipe end (100#) of said first fluid pipe (100), as well as up to a third flow opening (100c), particularly circular, semi-circular or oval, located in the second pipe end (100#) of said first fluid pipe (100) and spaced at a distance from said second flow opening (100b);
- a second fluid pipe (200), particularly designed as a rigid tube and/or a tube which is at least partially circular cylindrical, with an interior channel (200*) extending from a first flow opening (200a), particularly circular, semi-circular or oval, surrounded by a wall, particularly a metal wall, and located in a first pipe end (200+) of the second fluid pipe, as far as a second flow opening (200b), particularly circular, semi-circular or oval, located in a second pipe end (200#) of said second fluid pipe (200), in such a way that a largest flow cross-section ($A_{200,Max}$) of the second fluid pipe (200) is spaced at a distance from both the pipe's first pipe end (200+) and its second pipe end (200#);
- at least a third fluid pipe (300), particularly designed as a rigid tube and/or at least a partially circular cylindrical tube and/or identical in design to the second fluid pipe, with an interior channel (300*) extending from a first flow opening (300a), particularly circular, semi-circular or oval, surrounded by a wall, particularly a metal wall, and located in a first pipe end (300+) of the third fluid pipe, as far as a second flow opening (300b), particularly circular, semi-circular or oval, located in a second pipe end (300#) of said third fluid pipe (300), in such a way that a largest flow cross-section ($A_{300,Max}$) of the third fluid pipe (300) is spaced at a distance from both the pipe's first pipe end (300+) and its second pipe end (300#);
- and a fourth fluid pipe (400), particularly identical in design to the first fluid pipe and/or designed as a connection nozzle and/or serving to join the pipe, with an interior channel (400*) surrounded by wall, particularly a metal wall, which extends from a first flow opening (400a), particularly circular, located in a first pipe end (400+) of the fourth fluid pipe (400), wherein said end is particularly held by a connection flange, as far as a second flow opening (400b), particularly circular, semi-circular or oval, located in a second pipe end (400#) of said fourth fluid pipe (400), and as far as a third flow opening (400c), particularly circular, semi-circular or oval, located in the second pipe end (400#) of said fourth fluid pipe (400) and spaced at a distance from said second flow opening;
- wherein both the second fluid pipe (200) with its first pipe end (200+) and the third fluid pipe (300) with its first pipe end (300+) are connected, respectively, to the second pipe end (100#) of the first fluid pipe (100), particularly in such a way that both the interior channel of the second fluid pipe (200) and the interior channel of the third fluid pipe (300) communicate with the interior channel of the first fluid pipe (100) and/or in such a way that the first flow opening (200a) of the second fluid pipe (200) enters into the second flow opening (100b) of the first fluid pipe (100) and the first flow opening (300a) of the third fluid pipe (300) enters into the third flow opening (100c) of the first fluid pipe (100);

- wherein both the second fluid pipe (200) with its second pipe end (200#) and the third fluid pipe (300) with its second pipe end (300#) are connected, respectively, to the second pipe end (400#) of the fourth fluid pipe (400), particularly in such a way that both the interior channel (200*) of the second fluid pipe (200) and the interior channel (300*) of the third fluid pipe (300) communicate with the interior channel of the fourth fluid pipe (400) and/or in such a way that the second flow opening (200b) of the second fluid pipe (200) enters into the second flow opening (400b) of the fourth fluid pipe (400) and the second flow opening (300b) of the third fluid pipe (300) enters into the third flow opening (400c) of the fourth fluid pipe (400);

- wherein the first flow opening (200a) of the second fluid pipe (200) forms an inlet-side flow cross-section ($A_{200a}$), particularly circular, semi-circular or oval, of said second fluid pipe (200) and the second flow opening (200b) of the second fluid pipe (200) forms an outlet-side flow cross-section ($A_{200b}$), particularly circular, semi-circular or oval, of said second fluid pipe (200); and

- wherein the first flow opening (300a) of the third fluid pipe (300) forms an inlet-side flow cross-section ($A_{300a}$), particularly circular, semi-circular or oval, of said third fluid pipe (300) and the second flow opening (300b) of the third fluid pipe (300) forms an outlet-side flow cross-section ($A_{300b}$), particularly circular, semi-circular or oval, of said third fluid pipe (300);

- wherein the first fluid pipe (100), the second fluid pipe (200) and the third fluid pipe (300) are designed in such a way that

-- an outlet-side flow cross-section $A_{100,Min}$ of the first fluid pipe (100), located at the second pipe end (100#) of the first fluid pipe (100), but nevertheless adjacent to the second flow opening (100b) and the third flow opening (100c) of said first fluid pipe (100), the inlet-side flow cross-section $A_{200a}$ of the second fluid pipe (200) and the inlet-side flow cross-section $A_{300a}$ of the third fluid pipe (300) together satisfy a condition:

$$0.8 < \frac{A_{200a} + A_{300a}}{A_{100,Min}}$$

-- and that said outlet-side flow cross-section $A_{100,Min}$ of the first fluid pipe (100), the largest flow cross-section $A_{200,Max}$ of the second fluid pipe (200) and the largest flow cross-section $A_{300,Max}$ of the third fluid pipe (300) together satisfy a condition:

$$0.9 < \frac{A_{200,Max} + A_{300,Max}}{A_{100,Min}},$$

particularly at least approximately a condition:

$$\frac{A_{200,Max} + A_{300,Max}}{A_{100,Min}} = 1;$$

and/or

- wherein the first fluid pipe (100), the second fluid pipe (200) and the fourth fluid pipe (400) are designed in such a way that

-- the outlet-side flow cross-section $A_{200b}$ of the second fluid pipe (200), the outlet-side flow cross-section $A_{300b}$ of the third fluid pipe (300) and an inlet-side flow cross-section $A_{400,Min}$ of the fourth fluid pipe (400) located at the second pipe end (400#) of the fourth fluid pipe (400), but nevertheless adjacent to the second flow opening (400b) and to the third flow opening (400c) of said fourth fluid pipe (400), together satisfy a condition:

$$0.8 < \frac{A_{200b} + A_{300b}}{A_{400,Min}}$$

-- and that the largest flow cross-section $A_{200,Max}$ of the second fluid pipe (200), the largest flow cross-section $A_{300,Max}$ of the third fluid pipe (300) and the inlet-side flow cross-section $A_{400,Min}$ of the fourth fluid pipe (400) together satisfy a condition:

$$0.9 < \frac{A_{200,Max} + A_{300,Max}}{A_{400,Min}} \ ,$$

particularly at least approximately a condition:

$$\frac{A_{200,Max} + A_{300,Max}}{A_{400,Min}} = 1 \ .$$

2. Fluid pipe system as claimed in Claim 1,

- wherein the first fluid pipe (100), the second fluid pipe (200) and the third fluid pipe (300) are designed in such a way that the outlet-side flow cross-section $A_{100,Min}$ of the first fluid pipe (100), the largest flow cross-section $A_{200,Max}$ of the second fluid pipe (200) and the largest flow cross-section $A_{300,Max}$ of the third fluid pipe (300) together satisfy a condition:

$$\frac{A_{200,Max} + A_{300,Max}}{A_{100,Min}} < 1.1;$$

and/or
- wherein the second fluid pipe (200), the third fluid pipe (300) and the fourth fluid pipe (400) are designed in such a way that the largest flow cross-section $A_{200,Max}$ of the second fluid pipe (200), the largest flow cross-section $A_{300,Max}$ of the third fluid pipe (300) and the inlet-side flow cross-section $A_{400,Min}$ of the fourth fluid pipe (400) together satisfy a condition:

$$\frac{A_{200,Max} + A_{300,Max}}{A_{400,Min}} < 1.1.$$

3. Fluid pipe system as claimed in one of the previous claims,

- wherein the interior channel of the second fluid pipe (200) has a conical or cone-shaped form in sections, particularly in a first transition zone extending from its inlet-side flow cross-section ($A_{200a}$) in the direction of its largest flow cross-section ($A_{200,Max}$) and/or in a second transition zone extending from its outlet-side flow cross-section ($A_{200b}$) in the direction of its largest flow cross-section ($A_{200,Max}$), in such a way that adjacent flow cross-sections ($A_{200,j}$) of the second fluid pipe (200)
- starting from the inlet-side flow cross-section ($A_{200a}$) - increase continuously in one direction ($z_j^+$) towards the largest flow cross-section ($A_{200,Max}$), particularly in a linear or superproportional manner, and/or in such a way that adjacent flow cross-sections ($A_{200,j}$) of the second fluid pipe (200) - starting from the outlet-side flow cross-section ($A_{200b}$) - increase continuously in a direction ($z_j^-$) towards the largest flow cross-section ($A_{200,Max}$), particularly in a linear or superproportional manner; and/or

- wherein the interior channel of the third fluid pipe (300) has a conical or cone-like shape in sections, particularly in a first transition zone extending from the inlet-side flow cross-section ($A_{300a}$) in the direction of the largest flow cross-section ($A_{300,Max}$) and/or in a second transition zone extending from the outlet-side flow cross-section ($A_{300b}$) in the direction of the largest flow cross-section ($A_{300,Max}$), in such a way that adjacent flow cross-sections ($A_{300,j}$) of the third fluid pipe (300) - starting from the inlet-side flow cross-section ($A_{300a}$) - increase continuously in a direction ($z_j^+$) towards the largest flow cross-section ($A_{300,Max}$), particularly in a linear or superproportional manner, and/or in such a way that adjacent flow cross-sections ($A_{300,j}$) of the third fluid pipe (300) - starting from the outlet-side flow cross-section ($A_{300b}$) - increase continuously in a direction ($z_j^-$) towards the largest flow cross-section ($A_{300,Max}$), particularly in a linear or superproportional manner.

4. Fluid pipe system as claimed in one of the previous claims,

- wherein the second fluid pipe (200) and the third fluid pipe (300) are designed in such a way that the largest flow cross-section $A_{200,Max}$ of the second fluid pipe (200) and the largest flow cross-section $A_{300,Max}$ of the third fluid pipe (300) together satisfy a condition:

$$A_{200,Max} = A_{300,Max};$$

and/or
- wherein the first fluid pipe (100) and the fourth fluid pipe (400) are designed in such a way that the outlet-side flow cross-section $A_{100,Min}$ of the first fluid pipe (100) and the inlet-side flow cross-section $A_{400,Min}$ of the fourth fluid pipe (400) together satisfy a condition:

$$A_{100,Min} = A_{400,Min}.$$

5. Fluid pipe system as claimed in one of the previous claims,

- wherein the interior channel of the second fluid pipe (200) is designed at least in sections, particularly predominantly, in the form of a circular cylinder and the largest flow cross-section ($A_{200,Max}$) of the second fluid pipe (200) is located in a circular cylindrical section of said interior channel; and/or
- wherein the interior channel of the third fluid pipe (300) is designed at least in sections, particularly predominantly, in the form of a circular cylindrical and the largest flow cross-section ($A_{300,Max}$) of the third fluid pipe (300) is located in a circular cylindrical section of said interior channel.

6. Fluid pipe system as claimed in one of the previous claims, wherein the second fluid pipe (200) and the third fluid pipe (300) are designed in such a way that

- the inlet-side flow cross-section $A_{200a}$ of the second fluid pipe (200) and the inlet-side flow cross-section $A_{300a}$ of the third fluid pipe (300) satisfy a condition: $A_{200a} = A_{300a}$; and/or
- the outlet-side flow cross-section $A_{200b}$ of the second fluid pipe (200) and the outlet-side flow cross-section $A_{300b}$ of the third fluid pipe (300) satisfy a condition: $A_{200b} = A_{300b}$; and/or
- the inlet-side flow cross-section $A_{200a}$ and the outlet-side flow cross-section $A_{200b}$ of the second fluid pipe (200) satisfy a condition: $A_{200a} = A_{200b}$; and/or
- the inlet-side flow cross-section $A_{300a}$ and the outlet-side flow cross-section $A_{300b}$ of the third fluid pipe (300) satisfy a condition: $A_{300a} = A_{300b}$; and/or
- the inlet-side flow cross-section $A_{200a}$ and the outlet-side flow cross-section $A_{200b}$ of the second fluid pipe (200) form a minimum flow cross-section $A_{200,Min}$ of said second fluid pipe (200); and/or
- the inlet-side flow cross-section $A_{300a}$ and the outlet-side flow cross-section $A_{300b}$ of the third fluid pipe (300) form a minimum flow cross-section $A_{300,Min}$ of said third fluid pipe (300).

7. Fluid pipe system as claimed in one of the previous claims,

- wherein the outlet-side flow cross-section ($A_{100,Min}$) of the first fluid pipe (100) has an oval shape; and/or
- wherein the inlet-side flow cross-section ($A_{200a}$) of the second fluid pipe (200) has an oval or semi-circular shape; and/or
- wherein the inlet-side flow cross-section ($A_{300a}$) of the third fluid pipe (300) has an oval or semi-circular shape;

and/or
- wherein the outlet-side flow cross-section ($A_{200b}$) of the second fluid pipe (200) has an oval or semi-circular shape; and/or
- wherein the outlet-side flow cross-section ($A_{300b}$) of the third fluid pipe (300) has an oval or semi-circular shape; and/or
- wherein the inlet-side flow cross-section ($A_{400,Min}$) of the fourth fluid pipe (400) has an oval shape; and/or
- wherein the second fluid pipe (200) is designed in such a way that its inlet-side flow cross-section $A_{200a}$ and its largest flow cross-section $A_{200,Max}$ satisfy a condition:
$0.7 < A_{200a} / A_{200,Max} < 1$, particularly a condition $0.8 < A_{200a} / A_{200,Max} < 0.95$; and/or
- wherein the third fluid pipe (300) is designed in such a way that its inlet-side flow cross-section $A_{300a}$ and its largest flow cross-section $A_{300,Max}$ satisfy a condition:
$0.7 < A_{300a} / A_{300,Max} < 1$, particularly a condition $0.8 < A_{300a} / A_{300,Max} < 0.95$; and/or
- wherein the second fluid pipe (200) is designed in such a way that its outlet-side flow cross-section $A_{200b}$ and its largest flow cross-section $A_{200,Max}$ satisfy a condition:
$0.7 < A_{200b} / A_{200,Max} < 1$, particularly a condition $0.8 < A_{200b} / A_{200,Max} < 0.95$; and/or
- wherein the third fluid pipe (300) is designed in such a way that its outlet-side flow cross-section $A_{300b}$ and its largest flow cross-section $A_{300,Max}$ satisfy a condition:
$0.7 < A_{300b} / A_{300,Max} < 1$, particularly a condition $0.8 < A_{300b} / A_{300,Max} < 0.95$.

8. Fluid pipe system as claimed in one of the previous claims,

- wherein the interior channel of the first fluid pipe (100) is designed at least in sections, particularly predominantly, in the form of a circular cone or cone, particularly in such a way that adjacent flow cross-sections ($A_{100,i}$) of the first fluid pipe (100) - starting from the flow cross-section ($A_{100,Min}$) on the outlet side - increase continuously in a direction ($Z_i^+$) towards the first pipe end (100+), and that the flow cross-section ($A_{100,Min}$) on the outlet side of the first fluid pipe (100) is located in a circular conical or conical section of the interior channel of said first fluid pipe (100); and/or
- wherein the interior channel of the fourth fluid pipe (400) is designed at least in sections, particularly predominantly, in the form of a circular cone or cone, particularly in such a way that adjacent flow cross-sections ($A_{100,j}$) of the fourth fluid pipe (400) - starting from the flow cross-section ($A_{400,Min}$) on the inlet side - increase continuously in a direction ($Z_j^-$) towards the second pipe end (400#), and that the smallest flow cross-section ($A_{400,Min}$) of the fourth fluid pipe (400) is located in a circular conical or conical section of the interior channel of said fourth fluid pipe (400).

9. Fluid pipe system as claimed in one of the previous claims,

- wherein the first flow opening (100a) of the first fluid pipe (100) forms an inlet-side flow cross-section ($A_{100a}$) of said first fluid pipe (100); and
- wherein the first flow opening (400a) of the fourth fluid pipe (400) forms an outlet-side flow cross-section ($A_{400a}$) of said fourth fluid pipe (400), and
- wherein the first fluid pipe (100) and the fourth fluid pipe (400) are formed in such a way that
- - the inlet-side flow cross-section ($A_{100a}$) of the first fluid pipe (100) forms a largest flow cross-section ($A_{100,Max}$) of said first fluid pipe (100); and/or
- - the outlet-side flow cross-section ($A_{400a}$) of the fourth fluid pipe (400) forms a largest flow cross-section ($A_{400,Max}$) of said fourth fluid pipe (400).

10. Fluid pipe system as claimed in one of the previous claims,

- wherein the largest flow cross-section ($A_{200,Max}$) of the second fluid pipe (200) is circular in shape; and/or
- wherein the largest flow cross-section ($A_{300,Max}$) of the third fluid pipe (300) is circular in shape; and/or
- wherein the inlet-side flow cross-section of the first fluid pipe (100) is circular in shape; and/or
- wherein the outlet-side flow cross-section of the fourth fluid pipe (400) is circular in shape.

11. Fluid pipe system as claimed in one of the previous claims,

- wherein at least the second fluid pipe and the third fluid pipe each form part of a transducer, particularly a vibronic transducer, wherein said transducer serves to generate at least a measuring signal (s1, s2) corresponding to the at least one measured variable; and/or

- wherein the first fluid pipe (100) is formed by means of a distribution piece of a transducer, particularly of a vibronic transducer and/or of a transducer of a Coriolis mass flowmeter, wherein said distribution piece is particularly designed in the form of a pipe branch or a pipe junction; and/or
- wherein the fourth fluid pipe (400) is formed by means of a distribution piece of a transducer, particularly of a vibronic transducer and/or of a transducer of a Coriolis mass flowmeter, wherein said distribution piece is particularly designed in the form of a pipe branch or a pipe junction.

12. Fluid pipe system as claimed in one of the previous claims, wherein at least the second fluid pipe (200) is designed to have fluid flow through it and to be made to vibrate during this time.

13. Fluid pipe system as claimed in the previous claim, wherein the third fluid pipe (300) is designed to have fluid flow through it, particularly simultaneously with the second fluid pipe (200), and to be made to vibrate during this time, particularly simultaneously with the second fluid pipe (200).

14. Use of a fluid pipe system as claimed in one of the previous claims, wherein said system is designed to determine the measured values for at least one measured variable - particularly a mass flow rate, a mass flow, a volume flow rate, a volume flow, a density, a viscosity or a temperature - of a fluid to be transferred, particularly a liquefied gas, for example a liquid gas containing methane and/or ethane and/or propane and/or butane and/or a liquefied natural gas (LNG), or a compressed gas, for example a compressed natural gas (CNG).

**Revendications**

1. Système de conduites de fluide, comprenant :

   - une première conduite de fluide (100), réalisée notamment sous la forme d'une tubulure de raccordement et/ou d'une dérivation de conduite, avec un canal intérieur (100*) entouré d'une paroi, notamment métallique, et qui s'étend d'une première ouverture d'écoulement (100a), notamment circulaire, située dans une première extrémité de conduite (100+) de la première conduite de fluide (100), laquelle extrémité est notamment saisie par une bride de raccordement, jusqu'à une deuxième ouverture d'écoulement (100b), notamment circulaire, semi-circulaire ou ovale, située dans une deuxième extrémité de conduite (100#) de ladite première conduite de fluide (100), ainsi que jusqu'à une troisième ouverture d'écoulement (100c), notamment circulaire, semi-circulaire ou ovale, située dans la deuxième extrémité de conduite (100#) de ladite première conduite de fluide (100) et espacée de ladite deuxième ouverture d'écoulement (100b) ;
   - une deuxième conduite de fluide (200), réalisée notamment sous la forme d'un tube rigide et/ou au moins partiellement cylindrique circulaire, avec un canal intérieur (200*) s'étendant d'une première ouverture d'écoulement (200a), notamment circulaire, semi-circulaire ou ovale, entourée d'une paroi, notamment métallique, et située dans une première extrémité de conduite (200+) de la deuxième conduite de fluide, jusqu'à une deuxième ouverture d'écoulement (200b), notamment circulaire, semi-circulaire ou ovale, située dans une deuxième extrémité de conduite (200#) de ladite deuxième conduite de fluide (200), de telle sorte qu'une section d'écoulement maximale ($A_{200,Max}$) de la deuxième conduite de fluide (200) est distante aussi bien de sa première extrémité de conduite (200+) que de sa deuxième extrémité de conduite (200#) ;
   - au moins une troisième conduite de fluide (300), réalisée notamment sous la forme d'un tube rigide et/ou au moins partiellement cylindrique circulaire et/ou de conception identique à la deuxième conduite de fluide, avec un canal intérieur (300*) s'étendant d'une première ouverture d'écoulement (300a), notamment circulaire, semi-circulaire ou ovale, entourée d'une paroi, notamment métallique, et située dans une première extrémité de conduite (300+) de la troisième conduite de fluide, jusqu'à une deuxième ouverture d'écoulement (300b), notamment circulaire, semi-circulaire ou ovale, située dans une deuxième extrémité de conduite (300#) de ladite troisième conduite de fluide (300), de telle sorte qu'une section d'écoulement maximale ($A_{300,Max}$) de la troisième conduite de fluide (300) est distante aussi bien de sa première extrémité de conduite (300+) que de sa deuxième extrémité de conduite (300#) ;
   - ainsi qu'une quatrième conduite de fluide (400), notamment de conception identique à la première conduite de fluide et/ou réalisée sous la forme d'une tubulure de raccordement et/ou servant de jonction de conduite, avec un canal intérieur (400*) entouré d'une paroi, notamment métallique, et qui s'étend d'une première ouverture d'écoulement (400a), notamment circulaire, située dans une première extrémité de conduite (400+) de la quatrième conduite de fluide (400), laquelle extrémité est notamment saisie par une bride de raccordement, jusqu'à une deuxième ouverture d'écoulement (400b), notamment circulaire, semi-circulaire ou ovale, située dans une deuxième extrémité de conduite (400#) de ladite quatrième conduite de fluide (400), ainsi que jusqu'à une troisième ouverture d'écoulement (400c), notamment circulaire, semi-circulaire ou ovale, située dans la deuxième extrémité de conduite (400#) de ladite quatrième conduite de fluide (400) et espacée de ladite deuxième ouverture d'écoulement ;

- système pour lequel aussi bien la deuxième conduite de fluide (200) avec sa première extrémité de conduite (200+) que la troisième conduite de fluide (300) avec sa première extrémité de conduite (300+) sont respectivement reliées à la deuxième extrémité de conduite (100#) de la première conduite de fluide (100), notamment de telle sorte qu'à la fois le canal intérieur de la deuxième conduite de fluide (200) et le canal intérieur de la troisième conduite de fluide (300) communiquent avec le canal intérieur de la première conduite de fluide (100) et/ou de telle sorte que la première ouverture d'écoulement (200a) de la deuxième conduite de fluide (200) débouche dans la deuxième ouverture d'écoulement (100b) de la première conduite de fluide (100) et la première ouverture d'écoulement (300a) de la troisième conduite de fluide (300) débouche dans la troisième ouverture d'écoulement (100c) de la première conduite de fluide (100) ;

- système pour lequel aussi bien la deuxième conduite de fluide (200) avec sa deuxième extrémité de conduite (200#) que la troisième conduite de fluide (300) avec sa deuxième extrémité de conduite (300#) sont respectivement reliées à la deuxième extrémité de conduite (400#) de la quatrième conduite de fluide (400), notamment de telle sorte qu'à la fois le canal intérieur (200*) de la deuxième conduite de fluide (200) et le canal intérieur (300*) de la troisième conduite de fluide (300) communiquent avec le canal intérieur de la quatrième conduite de fluide (400) et/ou de telle sorte que la deuxième ouverture d'écoulement (200b) de la deuxième conduite de fluide (200) débouche dans la deuxième ouverture d'écoulement (400b) de la quatrième conduite de fluide (400) et la deuxième ouverture d'écoulement (300b) de la troisième conduite de fluide (300) débouche dans la troisième ouverture d'écoulement (400c) de la quatrième conduite de fluide (400) ;

- la première ouverture d'écoulement (200a) de la deuxième conduite de fluide (200) formant une section d'écoulement côté entrée ($A_{200a}$), notamment circulaire, semi-circulaire ou ovale, de ladite deuxième conduite de fluide (200) et la deuxième ouverture d'écoulement (200b) de la deuxième conduite de fluide (200) formant une section d'écoulement côté sortie ($A_{200b}$), notamment circulaire, semi-circulaire ou ovale, de ladite deuxième conduite de fluide (200) ; et

- la première ouverture d'écoulement (300a) de la troisième conduite de fluide (300) formant une section d'écoulement côté entrée ($A_{300a}$), notamment circulaire, semi-circulaire ou ovale, de ladite troisième conduite de fluide (300) et la deuxième ouverture d'écoulement (300b) de la troisième conduite de fluide (300) formant une section d'écoulement côté sortie ($A_{300b}$), notamment circulaire, semi-circulaire ou ovale, de ladite troisième conduite de fluide (300) ;

- la première conduite de fluide (100), la deuxième conduite de fluide (200) et la troisième conduite de fluide (300) étant conçues de telle sorte

-- qu'une section d'écoulement côté sortie $A_{100,Min}$ de la première conduite de fluide (100), située à la deuxième extrémité de conduite (100#) de la première conduite de fluide (100), mais néanmoins adjacente à la deuxième ouverture d'écoulement (100b) ainsi qu'à la troisième ouverture d'écoulement (100c) de ladite première conduite de fluide (100), la section d'écoulement côté entrée $A_{200a}$ de la deuxième conduite de fluide (200) ainsi que la section d'écoulement côté entrée $A_{300a}$ de la troisième conduite de fluide (300) satisfont globalement à une condition :

$$0,8 < \frac{A_{200a} + A_{300a}}{A_{100,Min}}$$

-- et que ladite section d'écoulement côté sortie $A_{100,Min}$ de la première conduite de fluide (100), la section d'écoulement maximale $A_{200,Max}$ de la deuxième conduite de fluide (200) ainsi que la section d'écoulement maximale $A_{300,Max}$ de la troisième conduite de fluide (300) satisfont globalement à une condition :

$$0,9 < \frac{A_{200,Max} + A_{300,Max}}{A_{100,Min}} \quad ,$$

notamment au moins approximativement à une condition :

$$\frac{A_{200,Max} + A_{300,Max}}{A_{100,Min}} = 1 \quad ;$$

et/ou

- la première conduite de fluide (100), la deuxième conduite de fluide (200) et la quatrième conduite de fluide (400) étant conçues de telle sorte

-- que la section d'écoulement côté sortie $A_{200b}$ de la deuxième conduite de fluide (200), la section d'écoulement côté sortie $A_{300b}$ de la troisième conduite de fluide (300) ainsi qu'une section d'écoulement côté entrée $A_{400,Min}$ de la quatrième conduite de fluide (400) située à la deuxième extrémité de conduite (400#) de la quatrième conduite de fluide (400), mais néanmoins adjacente à la deuxième ouverture d'écoulement (400b) ainsi qu'à la troisième ouverture d'écoulement (400c) de ladite quatrième conduite de fluide (400), satisfont globalement à une condition :

$$0,8 < \frac{A_{200b} + A_{300b}}{A_{400,Min}}$$

-- et que la section d'écoulement maximale $A_{200,Max}$ de la deuxième conduite de fluide (200), de la section d'écoulement maximale $A_{300,Max}$ de la troisième conduite de fluide (300) ainsi que la dite section d'écoulement côté entrée $A_{400,Min}$ de la quatrième conduite de fluide (400) satisfont globalement à une condition :

$$0,9 < \frac{A_{200,Max} + A_{300,Max}}{A_{400,Min}} \quad ,$$

notamment au moins approximativement à une condition :

$$\frac{A_{200,Max} + A_{300,Max}}{A_{400,Min}} = 1 \quad .$$

2. Système de conduites de fluide selon la revendication 1,

- pour lequel la première conduite de fluide (100), la deuxième conduite de fluide (200) et la troisième conduite de fluide (300) sont conçues de telle sorte que la section d'écoulement côté sortie $A_{100,Min}$ de la première conduite de fluide (100), de la section d'écoulement maximale $A_{200,Max}$ de la deuxième conduite de fluide (200) ainsi que de la section d'écoulement maximale $A_{300,Max}$ de la troisième conduite de fluide (300) satisfont globalement à une condition :

$$\frac{A_{200,Max} + A_{300,Max}}{A_{100,Min}} < 1,1 \quad ;$$

et/ou

- pour lequel la deuxième conduite de fluide (200), la troisième conduite de fluide (300) et la quatrième conduite de fluide (400) sont conçues de telle sorte que la section d'écoulement maximale $A_{200,Max}$ de la deuxième conduite de fluide (200), de la section d'écoulement maximale $A_{300,Max}$ de la troisième conduite de fluide (300) ainsi que de la section d'écoulement côté entrée $A_{400,Min}$ de la quatrième conduite de fluide (400) satisfont globalement à une condition :

$$\frac{A_{200,Max} + A_{300,Max}}{A_{400,Min}} < 1{,}1.$$

**3.** Système de conduites de fluide selon l'une des revendications précédentes,

- pour lequel le canal intérieur de la deuxième conduite de fluide (200) présente une forme conique dans certaines sections, notamment dans une première zone de transition s'étendant de sa section d'écoulement côté entrée ($A_{200a}$) en direction de sa section d'écoulement maximale ($A_{200,Max}$) et/ou dans une deuxième zone de transition s'étendant de sa section d'écoulement côté sortie ($A_{200b}$) en direction de sa section d'écoulement maximale ($A_{200,Max}$), de telle sorte que des sections d'écoulement ($A_{200,j}$) contiguës de la deuxième conduite de fluide (200), partant de sa section d'écoulement côté entrée ($A_{200a}$), augmentent en continu dans une direction ($z_j^+$) vers sa section d'écoulement maximale ($A_{200,Max}$), notamment de manière linéaire ou surproportionnelle, et/ou de telle sorte que des sections d'écoulement ($A_{200,j}$) contiguës de la deuxième conduite de fluide (200), partant de sa section d'écoulement côté sortie ($A_{200b}$), augmentent en continu dans une direction ($z_j^-$) vers sa section d'écoulement maximale ($A_{200,Max}$), notamment de manière linéaire ou surproportionnelle ; et/ou
- pour lequel le canal intérieur de la troisième conduite de fluide (300) présente une forme conique dans certaines sections, notamment dans une première zone de transition s'étendant de sa section d'écoulement côté entrée ($A_{300a}$) en direction de sa section d'écoulement maximale ($A_{300,Max}$) et/ou dans une deuxième zone de transition s'étendant de sa section d'écoulement côté sortie ($A_{300b}$) en direction de sa section d'écoulement maximale ($A_{300,Max}$), de telle sorte que des sections d'écoulement ($A_{300,j}$) contiguës de la troisième conduite de fluide (300), partant de sa section d'écoulement côté entrée ($A_{300a}$), augmentent en continu dans une direction ($z_j^+$) vers sa section d'écoulement maximale ($A_{300,Max}$), notamment de manière linéaire ou surproportionnelle, et/ou de telle sorte que des sections d'écoulement ($A_{300,j}$) contiguës de la troisième conduite de fluide (300), partant de sa section d'écoulement côté sortie ($A_{300b}$), augmentent en continu dans une direction ($z_j^-$) vers sa section d'écoulement maximale ($A_{300,Max}$), notamment de manière linéaire ou surproportionnelle.

**4.** Système de conduites de fluide selon l'une des revendications précédentes,

- pour lequel la deuxième conduite de fluide (200) et la troisième conduite de fluide (300) sont conçues de telle sorte que la section d'écoulement maximale $A_{200,Max}$ de la deuxième conduite de fluide (200) et la section d'écoulement maximale $A_{300,Max}$ de la troisième conduite de fluide (300) satisfont globalement à une condition :

$$A_{200,Max} = A_{300,Max} ;$$

et/ou
- pour lequel la première conduite de fluide (100) et la quatrième conduite de fluide (400) sont conçues de telle sorte que la section d'écoulement minimale $A_{100,Min}$ de la première conduite de fluide (100) et la section d'écoulement minimale $A_{100,Min}$ de la quatrième conduite de fluide (400) satisfont globalement à une condition :

$$A_{100,Min} = A_{400,Min}.$$

**5.** Système de conduites de fluide selon l'une des revendications précédentes,

- pour lequel le canal intérieur de la deuxième conduite de fluide (200) est réalisé au moins par sections, notamment de manière prépondérante, sous forme cylindrique circulaire et la section d'écoulement maximale ($A_{200,Max}$) de la deuxième conduite de fluide (200) est située dans une section cylindrique circulaire du même canal intérieur ; et/ou
- pour lequel le canal intérieur de la troisième conduite de fluide (300) est réalisé au moins par sections, notamment de manière prépondérante, sous forme cylindrique circulaire et la section d'écoulement maximale ($A_{300,Max}$) de la troisième conduite de fluide (300) est située dans une section cylindrique circulaire dudit canal intérieur.

**6.** Système de conduites de fluide selon l'une des revendications précédentes, pour lequel la deuxième conduite de fluide (200) et la troisième conduite de fluide (300) sont conçues de telle sorte,

- que la section d'écoulement côté entrée $A_{200a}$ de la deuxième conduite de fluide (200) ainsi que la section d'écoulement côté entrée $A_{300a}$ de la troisième conduite de fluide (300) satisfont à une condition : $A_{200a} = A_{300a}$ ; et/ou

- que la section d'écoulement côté sortie $A_{200b}$ de la deuxième conduite de fluide (200) ainsi que la section d'écoulement côté sortie $A_{300b}$ de la troisième conduite de fluide (300) satisfont à une condition : $A_{200b} = A_{300b}$ ; et/ou

- que la section d'écoulement côté entrée $A_{200a}$ ainsi que la section d'écoulement côté sortie $A_{200b}$ de la deuxième conduite de fluide (200) satisfont à une condition : $A_{200a} = A_{200b}$ ; et/ou

- que la section d'écoulement côté entrée $A_{300a}$ ainsi que la section d'écoulement côté sortie $A_{300b}$ de la troisième conduite de fluide (300) satisfont à une condition :

$A_{300a} = A_{300b}$ ; et/ou

- que la section d'écoulement côté entrée $A_{200a}$ ainsi que la section d'écoulement côté sortie $A_{200b}$ de la deuxième conduite de fluide (200) forment une section d'écoulement minimale $A_{200,Min}$ de la même deuxième conduite de fluide (200) ; et/ou

- que la section d'écoulement côté entrée $A_{300a}$ ainsi que la section d'écoulement côté sortie $A_{300b}$ de la troisième conduite de fluide (300) forment une section d'écoulement minimale $A_{300,Min}$ de ladite troisième conduite de fluide (300).

7. Système de conduites de fluide selon l'une des revendications précédentes,

- pour lequel la section d'écoulement côté sortie ($A_{100,Min}$) de la première conduite de fluide (100) est de forme ovale ; et/ou
- pour lequel la section d'écoulement côté entrée ($A_{200a}$) de la deuxième conduite de fluide (200) est de forme ovale ou semi-circulaire ; et/ou
- pour lequel la section d'écoulement côté entrée ($A_{300a}$) de la troisième conduite de fluide (300) est de forme ovale ou semi-circulaire ; et/ou
- pour lequel la section d'écoulement côté sortie ($A_{200b}$) de la deuxième conduite de fluide (200) est de forme ovale ou semi-circulaire ; et/ou
- pour lequel la section d'écoulement côté sortie ($A_{300b}$) de la troisième conduite de fluide (300) est de forme ovale ou semi-circulaire ; et/ou
- pour lequel la section d'écoulement côté entrée ($A_{400,Min}$) de la quatrième conduite de fluide (400) est de forme ovale ; et/ou
- pour lequel la deuxième conduite de fluide (200) est conçue de telle sorte que sa section d'écoulement côté entrée $A_{200a}$ et sa section d'écoulement maximale $A_{200,Max}$ satisfont à une condition :
$0,7 < A_{200a} / A_{200,Max} < 1$, notamment à une condition $0,8 < A_{200a} / A_{200,Max} < 0,95$ ; et/ou
- pour lequel la troisième conduite de fluide (300) est conçue de telle sorte que sa section d'écoulement côté entrée $A_{300a}$ et sa section d'écoulement maximale $A_{300,Max}$ satisfont à une condition :
$0,7 < A_{300a} / A_{300,Max} < 1$, notamment à une condition $0,8 < A_{300a} / A_{300,Max} < 0,95$ ; et/ou
- pour lequel la deuxième conduite de fluide (200) est conçue de telle sorte que sa section d'écoulement côté sortie $A_{200b}$ et sa section d'écoulement maximale $A_{200,Max}$ satisfont à une condition :
$0,7 < A_{200b} / A_{200,Max} < 1$, notamment à une condition $0,8 < A_{200b} / A_{200,Max} < 0,95$ ; et/ou
- pour lequel la troisième conduite de fluide (300) est conçue de telle sorte que sa section d'écoulement côté sortie $A_{300b}$ et sa section d'écoulement maximale $A_{300,Max}$ satisfont à une condition :
$0,7 < A_{300b} / A_{300,Max} < 1$, notamment à une condition $0,8 < A_{300b} / A_{300,Max} < 0,95$.

8. Système de conduites de fluide selon l'une des revendications précédentes,

- pour lequel le canal intérieur de la première conduite de fluide (100) est réalisé au moins par sections, notamment de manière prépondérante, en forme de cône circulaire ou de cône, notamment de telle sorte que des sections d'écoulement contiguës ($A_{100,i}$) de la première conduite de fluide (100), en partant de sa section d'écoulement ($A_{100,Min}$) côté sortie, augmentent continuellement dans une direction ($Z_i^+$) vers la première extrémité de conduite (100+), et que la section d'écoulement ($A_{100,Min}$) côté sortie de la première conduite de fluide (100) est située dans une section en forme de cône circulaire ou de cône du canal intérieur de ladite première conduite de fluide (100) ; et/ou
- pour lequel le canal intérieur de la quatrième conduite de fluide (400) est réalisé au moins par sections, notamment de manière prépondérante, en forme de cône circulaire ou de cône, notamment de telle sorte que des sections d'écoulement contiguës ($A_{100,j}$) de la quatrième conduite de fluide (400), en partant de sa section d'écoulement ($A_{400,Min}$) côté entrée, augmentent continuellement dans une direction ($Z_j^-$) vers sa deuxième

extrémité de conduite (400#), et que la plus petite section d'écoulement ($A_{400,Min}$) de la quatrième conduite de fluide (400) est située dans une section en forme de cône circulaire ou de cône du canal intérieur de ladite quatrième conduite de fluide (400).

9. Système de conduites de fluide selon l'une des revendications précédentes,

- pour lequel la première ouverture d'écoulement (100a) de la première conduite de fluide (100) forme une section d'écoulement côté entrée ($A_{100a}$) de ladite première conduite de fluide (100) ; et
- pour lequel la première ouverture d'écoulement (400a) de la quatrième conduite de fluide (400) forme une section d'écoulement côté sortie ($A_{400a}$) de ladite quatrième conduite de fluide (400), et
- pour lequel la première conduite de fluide (100) et la quatrième conduite de fluide (400) sont formées de telle sorte ,

-- que la section d'écoulement côté entrée ($A_{100a}$) de la première conduite de fluide (100) forme une section d'écoulement maximale ($A_{100,Max}$) de ladite première conduite de fluide (100) ; et/ou
-- que la section d'écoulement côté sortie ($A_{400a}$) de la quatrième conduite de fluide (400) forme une section d'écoulement maximale ($A_{400,Max}$) de ladite quatrième conduite de fluide (400).

10. Système de conduites de fluide selon l'une des revendications précédentes,

- pour lequel la section d'écoulement maximale ($A_{200,Max}$) de la deuxième conduite de fluide (200) est de forme circulaire ; et/ou
- pour lequel la section d'écoulement maximale ($A_{300,Max}$) de la troisième conduite de fluide (300) est de forme circulaire ; et/ou
- pour lequel la section d'écoulement côté entrée de la première conduite de fluide (100) est de forme circulaire ; et/ou
- pour lequel la section d'écoulement côté sortie de la quatrième conduite de fluide (400) est de forme circulaire.

11. Système de conduites de fluide selon l'une des revendications précédentes,

- pour lequel au moins la deuxième conduite de fluide et la troisième conduite de fluide font chacune partie d'un transducteur, notamment un transducteur vibronique, lequel transducteur sert à générer au moins un signal de mesure (s1, s2) correspondant à l'au moins une grandeur de mesure ; et/ou
- la première conduite de fluide (100) étant formée au moyen d'une pièce de distribution d'un transducteur, notamment d'un transducteur vibronique et/ou d'un transducteur d'un débitmètre massique Coriolis, laquelle conduite est réalisée notamment sous la forme d'une dérivation de conduite ou d'une jonction de conduite ; et/ou
- la quatrième conduite de fluide (400) étant formée au moyen d'une pièce de distribution d'un transducteur, notamment d'un transducteur vibronique et/ou d'un transducteur d'un débitmètre massique Coriolis, laquelle conduite est réalisée notamment sous la forme d'une dérivation de conduite ou d'une jonction de conduite.

12. Système de conduites de fluide selon l'une des revendications précédentes, pour lequel au moins la deuxième conduite de fluide (200) est conçue pour être traversée par un fluide et pour être mise en vibration pendant ce temps.

13. Système de conduites de fluide selon la revendication précédente, pour lequel la troisième conduite de fluide (300) est conçue pour être traversée par un fluide, notamment simultanément à la deuxième conduite de fluide (200), et pour être mise en vibration pendant ce temps, notamment simultanément à la deuxième conduite de fluide (200).

14. Utilisation d'un système de conduites de fluide selon l'une des revendications précédentes, lequel système est destiné à la détermination de valeurs mesurées pour au moins une grandeur de mesure - notamment un débit massique, un débit volumique, un débit volumétrique, une densité, une viscosité ou une température - d'un fluide à transférer, notamment d'un gaz liquéfié, par exemple d'un gaz liquide contenant du méthane et/ou de l'éthane et/ou du propane et/ou du butane et/ou d'un gaz naturel liquéfié (GNL), ou d'un gaz comprimé, par exemple d'un gaz naturel comprimé (GNC).

*Fig. 1*

Fig. 2

EP 3 458 815 B1

**Fig. 3a**

**Fig. 3b**

**Fig. 3c**

*Fig. 4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 816807 A
- US 20010037690 A
- US 20080184816 A
- US 20110161017 A
- US 20110154912 A
- US 20110161018 A
- US 20110146416 A
- US 20120167697 A
- US 20150082916 A
- US 4801897 A
- US 4823613 A
- US 5602345 A
- US 5796011 A
- WO 9015310 A
- WO 0008423 A
- WO 2006107297 A
- WO 2006118557 A
- WO 2008059262 A
- WO 2009048457 A
- WO 2009078880 A
- WO 2009120223 A
- WO 2009123632 A
- WO 2010059157 A
- WO 2012170020 A
- WO 2013006171 A
- WO 2013070191 A
- WO 2015085025 A
- DE 102015118864
- US 20110265580 A
- US 20120192658 A
- DE 102014118367